(19) Europäisches Patentamt
European Patent Office
Office européen des brevets

(11) EP 3 293 616 A1

(12) **EUROPEAN PATENT APPLICATION**
published in accordance with Art. 153(4) EPC

(43) Date of publication:
14.03.2018 Bulletin 2018/11

(51) Int Cl.:
*G06F 3/041* (2006.01)          *G06F 3/01* (2006.01)
*G06F 3/0488* (2013.01)

(21) Application number: 15891296.4

(22) Date of filing: 07.05.2015

(86) International application number:
PCT/JP2015/063209

(87) International publication number:
WO 2016/178289 (10.11.2016 Gazette 2016/45)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Fujitsu Limited
Kawasaki-shi, Kanagawa 211-8588 (JP)

(72) Inventors:
• KASHIWAGI, Susumu
  Kawasaki-shi
  Kanagawa 211-8588 (JP)
• MIURA, Masaki
  Kawasaki-shi
  Kanagawa 211-8588 (JP)

(74) Representative: Haseltine Lake LLP
Lincoln House, 5th Floor
300 High Holborn
London WC1V 7JH (GB)

(54) **ELECTRONIC DEVICE AND VIBRATION CONTROL PROGRAM**

(57) An electronic apparatus includes a calculation unit configured to calculate a change in size of an overlapping area between a contact area and an image area when the contact area detected on an input operation part moves across a boundary of the image area that displays an object image on the input operation part, and a vibration control unit configured to change a type or an intensity of a vibration applied to the input operation part in accordance with the change.

## FIG.3

**Description**

[Technical Field]

The disclosures herein relate to an electronic apparatus and a vibration control program.

[Background Art]

In recent years, electronic apparatuses such as smartphones and tablet computers equipped with a touch panel have become prevalent. In conventional electronic apparatuses, technologies that provide a sensation of touching a three-dimensional object by changing the friction between the user's finger and the touch panel are known.
These technologies provide a sensation of touching a three-dimensional object by changing the friction at an edge portion of an object.

[Related-Art Document]

[Patent Document] Japanese Laid-open Patent Publication No. 2013-156686

[Summary of the Invention]

[Problem to be Solved by Invention]

Although such conventional electronic apparatuses can provide tactile sensations of projections and recesses of a three-dimensional object, if the three-dimensional object is a button, it is difficult to provide distinct tactile sensations to an extent allowing the user to identify the object as a button.
It is an object of one aspect of the present invention to provide an electronic apparatus and a vibration control program that can produce a change in friction, for example, when the user's finger moves up onto an object such as a button.

[Means to Solve the Problem]

According to an aspect of the embodiment, an electronic apparatus includes a calculation unit configured to calculate a change in size of an overlapping area between a contact area and an image area when the contact area detected on an input operation part moves across a boundary of the image area that displays an object image on the input operation part, and a vibration control unit configured to change a type or an intensity of a vibration applied to the input operation part in accordance with the change.
The above-described respective units may be a computer-readable recording medium having stored therein a method or a program for causing a computer to execute processing of the respective units.

[Advantage of the Invention]

According to at least one embodiment of the present disclosures, it is possible to produce a change in friction, for example, when the user's finger moves up onto an object such as a button.

[Brief Description of Drawings]

Fig. 1 is a first drawing illustrating a case in which an electronic apparatus of a first embodiment is operated;
Fig. 2 is a second drawing illustrating a case in which the electronic apparatus of the first embodiment is operated;
Fig. 3 is a first drawing illustrating the production of a tactile sensation of the first embodiment;
Fig. 4 is a first drawing illustrating the relationship between a contact area and friction of the first embodiment;
Fig. 5 is a second drawing illustrating the production of a tactile sensation of the first embodiment;
Fig. 6 is a second drawing illustrating the relationship between a contact area and friction of the first embodiment;
Fig. 7 is a drawing illustrating the electronic apparatus of the first embodiment;
Fig. 8 is a drawing illustrating an example of a hardware configuration of the electronic apparatus of the first embodiment;
Fig. 9 is a drawing illustrating functions of the electronic apparatus of the first embodiment;

Fig. 10 is a drawing illustrating a contact area;

Fig. 11 is a drawing illustrating an example in which touch information is obtained;

Fig. 12 is a first drawing illustrating a case in which an overlapping area is detected;

Fig. 13 is a second drawing illustrating a case in which an overlapping area is detected;

Fig. 14 is a drawing illustrating vibration control information of the first embodiment;

Fig. 15 is a flowchart illustrating processing executed by a vibration control processing unit of the first embodiment;

Fig. 16 is a flowchart illustrating correction processing 1;

Fig. 17 is a flowchart illustrating correction processing 2;

Fig. 18 is a flowchart illustrating correction processing 3;

Fig. 19 is a first drawing illustrating the production of a tactile sensation of a second embodiment;

Fig. 20 is a second drawing illustrating the production of a tactile sensation of the second embodiment;

Fig.21 is a drawing illustrating height information associated with vibration control information;

Fig. 22 is a drawing illustrating a configuration of an electronic apparatus of a third embodiment;

Fig. 23 is a plan view of the electronic apparatus of the third embodiment;

Fig. 24 is a cross-sectional view of the electronic apparatus taken along line A-A of Fig. 23;

Fig. 25 is a drawing illustrating crests of a standing wave formed in parallel with a short side of a top panel, of standing waves generated on the top panel by a natural vibration in an ultrasonic frequency band;

Fig. 26 is a drawing illustrating cases in which a kinetic friction force applied to the fingertip of the user who performs an input operation changes by the natural vibration in the ultrasonic frequency band generated on the top panel of the electronic apparatus;

Fig. 27 is a drawing illustrating first data and second data stored in a memory;

Fig. 28 is a flowchart illustrating processing executed by a drive control unit of a drive control IC of the electronic apparatus of the third embodiment;

Fig. 29 is a cross-sectional view of an electronic apparatus of a first variation;

Fig. 30 is a drawing illustrating an electronic apparatus of a second variation;

Fig. 31 is a cross-sectional view of a touch pad of the electronic apparatus of the second variation; and

Fig. 32 is a cross-sectional view of an electronic apparatus of a third variation.

[Mode for Carrying Out the Invention]

In the following, embodiments of the present invention will be described with reference to the accompanying drawings.

[First Embodiment]

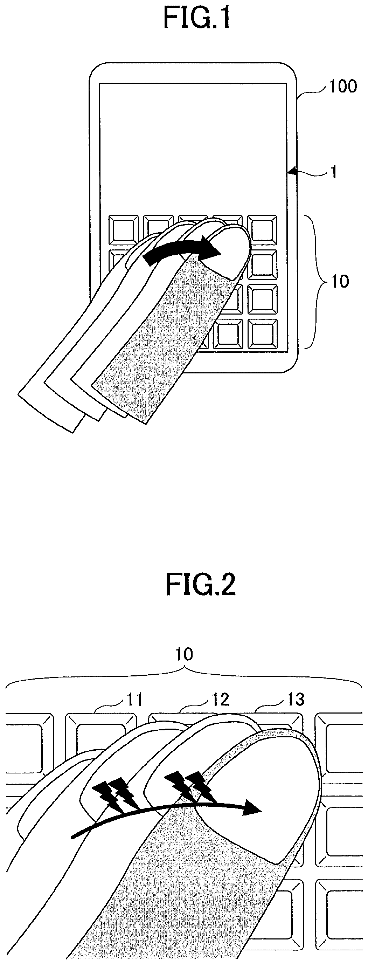

A first embodiment will be described below with reference to the drawings. Fig. 1 is a first drawing illustrating a case in which an electronic apparatus of a first embodiment is operated.

An electronic apparatus 100 of the present embodiment produces a tactile sensation of projections and recesses when the user traces a plurality of three-dimensional-like objects 10 such as buttons displayed on a screen 1 to an extent allowing the user to identify the objects as buttons.

Fig. 2 is a second drawing illustrating a case in which the electronic apparatus of the first embodiment is operated. Fig. 2 describes a case in which the user's finger traces objects 11, 12, and 13 of the plurality of objects 10.

In this case, the electronic apparatus 100 provides the user's finger with the tactile sensation of moving up onto the object 11 and the tactile sensation of moving down from the object 11 so that the tactile sensation of projections and recesses of the object 11 can be produced.

More specifically, the electronic apparatus 100 controls friction between the user's finger and the screen 1 by changing a type and an intensity of a vibration applied to the finger in accordance with the size of an overlapping area between a contact area of the finger with the screen 1 and an image area that displays the object 11 so that the tactile sensation of projections and recesses can be produced. The same applies to the object 12 and the object 13.

In the following description of the embodiments, the contact area refers to an area where the user's finger or the like contacts the screen of the electronic apparatus 100. The image area refers to an area that displays an image representing a three-dimensional object. The overlapping area refers to an area where the contact area overlaps with the image area. Moreover, for descriptions of the following embodiments, the image representing the three-dimensional object is referred to as an object image. For example, object images of the present embodiment include images of buttons as illustrated in Fig. 1 and Fig. 2.

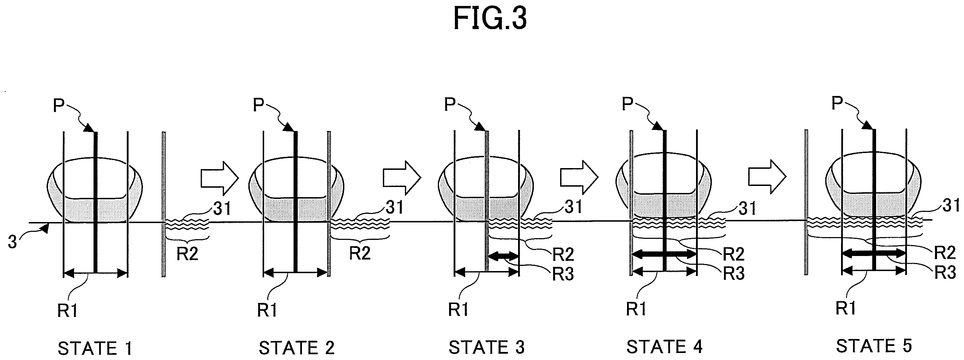

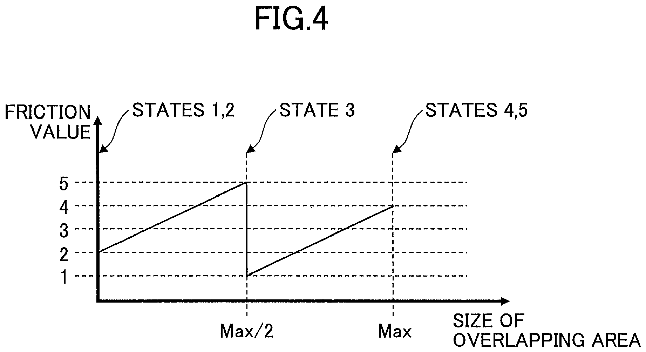

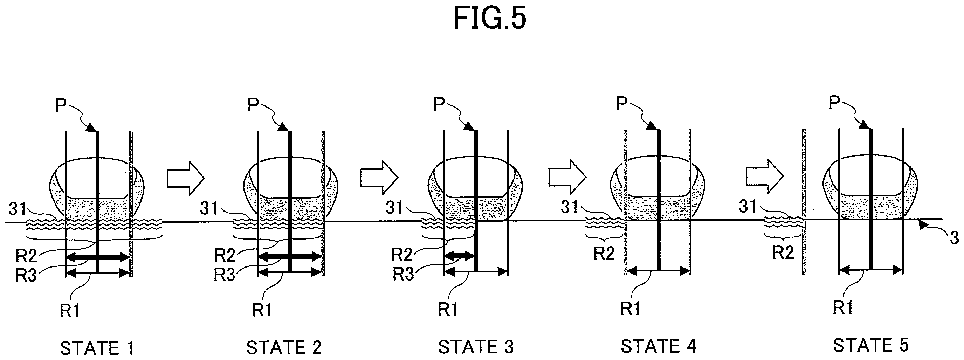

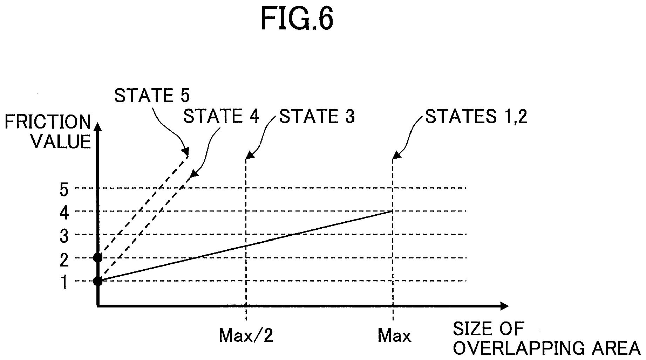

The relationship between an overlapping area and friction will be described below with reference to Figs. 3 through 6. Fig. 3 and Fig. 4 illustrate a method for providing a tactile sensation of the user's finger moving up onto the three-dimensional object when the user traces the object image displayed on the electronic apparatus 100. Fig. 5 and Fig. 6 illustrate a method for providing a tactile sensation of the user's finger moving down from the three-dimensional object when the user traces the object image. Hereinafter, the three-dimensional object is referred to as a button.

Fig. 3 is a first drawing illustrating the production of the tactile sensation of the first embodiment. States 1 through 5 in Fig. 3 illustrate states in which the user's finger is gradually overlapping with an object image 31 when the user traces with the finger the object image 31 displayed on a screen 3.

State 1 illustrates a state in which a contact area R1 of the finger with the screen 3 does not overlap with an image area R2. A point P illustrated in state 1 refers to touch coordinates obtained from the contact area R1. The touch coordinates refer to coordinates on the screen 3 touched by the finger. The details of the touch coordinates will be described later.

State 2 illustrates a state in which, when the object image 31 is assumed to be a button, the user's finger touches the edge of the button. In the present embodiment, state 2 refers to a state in which the touch coordinates P coincide with the boundary of an image area R2.

State 3 illustrates a state in which, when the object image 31 is assumed to be a button, the user's finger moves up onto the edge of the button. In the present embodiment, state 3 refers to a state in which half of the contact area overlaps with an area R3. Namely, the size of the overlapping area R3 is half the largest size. The size of the overlapping area R3 becomes the largest when the contact area R1 is included in the image area R2.

State 4 illustrates a state in which, when the object image 31 is assumed to be a button, the user's finger is placed on top of the button. In the present embodiment, state 4 refers to a state in which the contact area R1 coincides with the overlapping area R3. Namely, in state 4, the size of the overlapping area R3 becomes the largest.

State 5 illustrates a state in which, when the object image 31 is assumed to be a button, the user's finger traces the upper surface of the button. In the present embodiment, state 5 refers to a state in which the contact area R1 coincides with the overlapping area R3, as in the case of state 4.

In Fig. 3, when the object image 31 is assumed to be a button, when the user's finger reaches state 2 from state 1, the finger is pressed against the edge of the button in the process of tracing the button. Therefore, a force in the direction opposite to the tracing direction starts to be applied on the user's finger. The force in the opposite direction to the tracing direction increases between state 2 and state 3.

Next, when the user's finger reaches state 3 from state 2, the finger moves up onto the edge of the button. At this time, a part of the finger leaves the screen 3 and does not touch anywhere while another part of the finger is placed on the top (upper surface) of the button. Therefore, in state 3, the finger is no longer pressed against the edge of the button and the force in the opposite direction to the tracing direction is no longer applied.

Between state 3 and state 4, an area of the finger contacting the upper surface of the button gradually increases in the process of tracing the upper face of the button. Therefore, friction between the finger and the upper surface of the button increases. In state 4, because the finger is placed on top of the button, the friction between the finger and the upper surface of the button becomes the largest and does not change in state 5.

In the present embodiment, the above-described changes of states are produced by controlling the magnitude of friction between the user's finger and the screen 3 of the electronic apparatus 100.

Fig. 4 is a first drawing illustrating the relationship between the contact area and friction of the first embodiment. In Fig. 4, a vertical axis represents a value indicating the magnitude of friction and a horizontal axis represents the size of an overlapping area. The value indicating the magnitude of friction means, for example, different levels of magnitude of friction applied to the contact area in accordance with a vibration generated on the screen 3 by the electronic apparatus 100. Hereinafter, the value indicating the magnitude of friction is referred to as a friction value. Fig. 4 illustrates that the larger the friction value is, the larger the friction in the contact area is. Namely, the present embodiment indicates that the larger the friction value is, the smaller the amplitude value of the vibration is, as well as the smaller the friction value is, the larger the amplitude value of the vibration is. Further, in Fig. 4, the maximum friction value is set to 5 and the minimum friction value is set to 1.

In the present embodiment, the friction value of the screen 3 is set to 2 and the friction value of the image area R2 is set to 5. Namely, in the present embodiment, the friction between the user's finger and the screen 3 that does not display the object image 31 is set to be smaller than the friction between the user's finger and the image area R2 that displays the object image 31.

Hereinafter, an area that does not display the object image 31 is referred to as a non-image area. Namely, the image area R2 has a rough texture compared to the non-image area and the non-image area has a slippery, smooth texture.

In the electronic apparatus 100 of the present invention, the friction value between state 1 and state 2 is set to 2 because the user's finger is on the screen 3. Then, the electronic apparatus 100 increase the friction value from 2 to 5 between state 2 and state 3. Namely, the electronic apparatus 100 of the present embodiment increases the friction value for a period of time after the contact area R1 moves across the boundary of the image area R2 until the size of the overlapping area R3 becomes half the size of the contact area R1.

In this manner, the electronic apparatus 100 of the present embodiment increases the friction between the user's finger and the screen 3 so that the force is produced in the opposite direction to the tracing direction of the finger.

Moreover, in the electronic apparatus 100, when the finger moves further in the tracing direction from state 3, the friction value instantaneously decreases from 5 to 1. In the present embodiment, by instantaneously decreasing the friction value from 5 to 1, it is possible to produce a state in which the force in the opposite direction to the tracing direction becomes no longer applied to the finger. In other words, the electronic apparatus 100 produces a state in which the force in the opposite direction to the tracing direction of the finger is released by instantaneously decreasing the friction value.

Subsequently, the electronic apparatus 100 increases the friction value from 1 to 4 while the finger moves from state 3 to state 4. In state 4, the size of the overlapping area R3 becomes the largest. Namely, in state 4, the contact area R1 is included in the image area R2. Therefore, in state 4, the electronic apparatus 100 sets a friction value to 4 that is the friction value of the image area R2. In state 5, the friction value 4 is maintained.

In this manner, in order to provide the tactile sensation of the finger moving up onto the three-dimensional object (button), the electronic apparatus 100 of the present embodiment sets a first peak value as a friction value between the contact area R1 and the finger when the size of the contact area R1 becomes half the size of the overlapping area R3. Further, the electronic apparatus 100 of the present embodiment sets a minimum value as a friction value between the contact area R1 and the finger immediately after the first peak value is reached. Moreover, the electronic apparatus 100 of the present embodiment sets a second peak value as a friction value between the contact area R1 and the finger when the entire contact area R1 becomes the overlapping area R3.

The first peak value represents the magnitude of friction between the contact area R1 and the finger immediately before the finger moves up onto the edge of the button. The minimum value represents the magnitude of friction between the contact area R1 and the finger at the moment when the finger has moved up onto the edge of the button. Further, the second peak value represents the magnitude of friction between the contact area R1 and the finger when the finger is placed on the upper surface of the button.

In the present embodiment, it is possible to provide the user's finger with the tactile sensation of moving up onto the three-dimensional object by controlling the magnitude of friction according to the size of the overlapping area R2 in the contact area R1.

Fig. 5 is a second drawing illustrating the production of the tactile sensation of the first embodiment. States 1 through 5 of Fig. 5 illustrates that the user's finger moves from a state in which the finger is overlapped with the object image 31 displayed on the screen 3 to a state in which the finger is located in the non-image area.

In Fig. 5, state 1 illustrates a state in which the contact area R1 of the finger with the screen overlaps with the image area R2. Namely, in state 1, the contact area R2 overlaps with the image area R2. This is the same state as states 4 and 5 illustrated in Fig. 3.

State 2 illustrates a state in which, when the object image 31 is assumed to be a button, the finger is placed on the upper surface of the button and also reaches the edge of the button.

State 3 illustrates a state in which, when the object image 31 is assumed to be a button, the finger starts to move down from the upper surface of the button toward the screen 3. In state 3, a part of the finger remains on the upper surface of the button and another part of the finger does not touch the screen 3. In the present embodiment, state 3 refers to a state in which the touch coordinates P coincide with the boundary of the image area R2.

State 4 illustrates a state in which, when the object image 31 is assumed to be a button, the finger has moved down onto the screen 3 from the top of the button. In the present embodiment, state 4 illustrates that no overlapping area R3 exists in the contact area R1.

State 5 illustrates a state in which, when the object image 31 is assumed to be a button, the finger is tracing the screen 3. In the present embodiment, state 5 illustrates that no overlapping area R3 exists in the contact area R1 as with the case of state 4, which is also the same state as state 1 illustrated in Fig. 3.

In Fig. 5, when the object image 31 is assumed to be a button, when the user's finger reaches state 2 from state 1, the finger reaches the edge of the button in the direction in which the finger traces the button.

Then, when the user's finger moves from state 2 through state 3 to state 4, the finger gradually moves down onto the screen 3 from the upper surface of the button. Namely, while the finger moves from state 2 to state 4, the percentage of the overlapping area R3 in the contact area R1 gradually decreases. More specifically, the percentage of the overlapping area in the contact area R1 decreases while the finger moves from a state in which the overlapping area R3 coincides with the contact area R1 as illustrated in state 2 to a state in which no overlapping area R3 exists in the contact area R1.

As of the overlapping area R3 no longer existing in state 4, this remains unchanged and no overlapping area R3 exists in state 5.

In the present embodiment, the above-described changes of states can be produced by controlling the magnitude of friction between the screen 3 of the electronic apparatus 100 and the finger.

Fig. 6 is a second drawing illustrating the relationship between the contact area and friction of the first embodiment. The vertical axis and horizontal axis in Fig. 6 represent the same meanings as those defined in Fig. 4.

In the electronic apparatus 100 of the present embodiment, the friction value from state 1 to state 2 illustrated in Fig. 5 is set to 4, and the friction value decreases to 1 when the finger moves from state 2 to state 4. The electronic apparatus 100 of the present embodiment produces the tactile sensation of the finger moving down from the rough upper surface of the button onto the smooth screen 3 by decreasing the friction between the finger and the screen 3.

Further, the electronic apparatus 100 instantaneously increases the friction value from 1 to 2 when the finger moves further in state 4 in the tracing direction. Before the finger enters a state 4 (the interval between state 3 and state 4), only a part of the finger contacts the upper surface of the button (and another part of the finger does not touch anywhere). Immediately after the finger enters state 4, the electronic apparatus 100 of the present embodiment increase the friction value and produces an impact on the finger exerted when the finger moves down onto the screen 3 upon entering state 4. In state 5, the electronic apparatus 100 maintains the friction value 2.

In this manner, the electronic apparatus 100 of the present embodiment decrease the friction value from 4, which is the friction value of the image area R2, to 1, which is the minimum value, for a period of time from the size of the overlapping area R3 being the largest until the overlapping area R3 no longer existing.

Then, immediately after the finger enters state 4 in which the overlapping area R3 no longer exists, the electronic apparatus 100 of the present embodiment increases a friction value from 1, which is the minimum value, to 2, which is the friction value of the non-image area.

As described above, in the present embodiment, it is possible to produce the tactile sensation of the user's finger moving down from the three-dimensional object on the screen by controlling the magnitude of friction according to the size of the overlapping area R2 in the contact area R1.

Furthermore, in the example illustrated in Fig. 6, the friction value increases from the minimum value to the friction value of the non-image area immediately after the finger enters state 4, but is not limited thereto. For example, the friction value may be set to the friction value of the non-image area in state 4, and the friction value of the non-image area may be maintained after state 4.

In the present embodiment, the edge of the projecting object can be clearly simulated by producing the tactile sensation of the finger moving up onto the button and the tactile sensation of the finger moving down from the button. Therefore, according to the electronic apparatus 10 of the present embodiment, for example, when a button is displayed on the screen, the user can identify that it is a button without looking at the screen by tracing the screen.

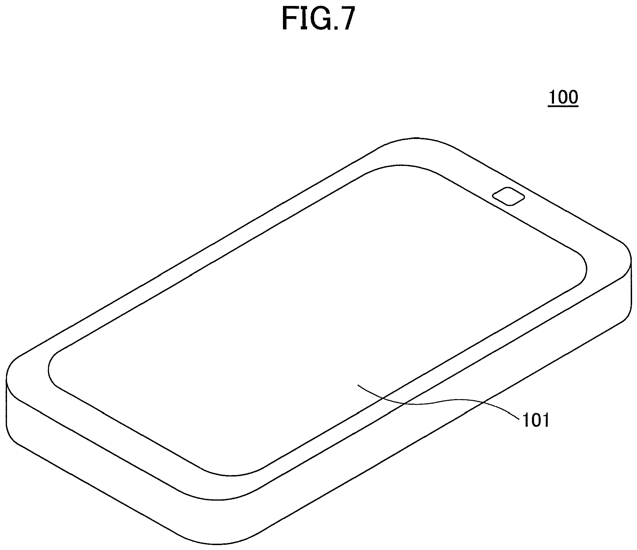

The electronic apparatus 100 will be described below. Fig. 7 is a drawing illustrating the electronic apparatus of the first embodiment.

The electronic apparatus 100 of the present embodiment is, by way of example, a smartphone or a tablet computer equipped with a touch panel as an input operation part 101.

The electronic apparatus 100 may be any apparatus equipped with a touch panel as an input operation part. Therefore, it may be an apparatus used for a particular purpose such as an electronic book reader.

The input operation part 101 of the electronic apparatus 10 has a touch panel and a display panel. Various graphic user interfaces (GUIs) are displayed on the display panel. The coordinates of the touch panel and the coordinates of the display panel are superimposed to correspond to each other. When the user of the electronic apparatus 100 touches the touch panel, a GUI displayed at the coordinates of the display panel corresponding to the coordinates of the touch panel touched by the user is instructed to perform an operation. In this way, various operations are performed.

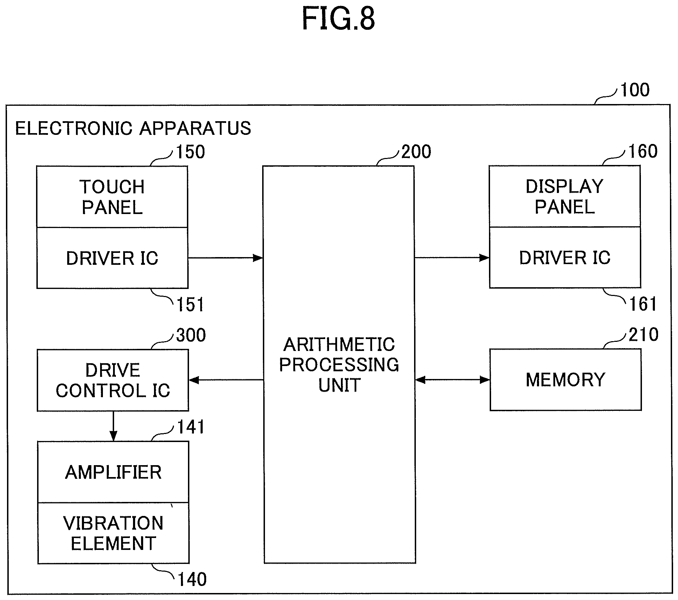

Fig. 8 is a drawing illustrating an example of a hardware configuration of the electronic apparatus of the first embodiment. The electronic apparatus 100 of the present embodiment includes a vibration element 140, an amplifier 141, a touch panel 150, a driver integrated circuit (IC) 151, a display panel 160A, a driver IC 161, an arithmetic processing unit 200, a memory 210, and a drive control IC.

The amplifier 141 of the present embodiment is disposed between the drive control IC 300 and the vibration element 140. The amplifier 141 amplifies driving signals outputted from the drive control IC 300 and drives the vibration element 140. The vibration element 140 of the present embodiment may be a piezoelectric element, for example, and may be any element that applies vibrations to the input operation part 101.

The driver IC 151 is coupled to the touch panel 150, detects position data representing a position where an input operation (touch) is performed on the touch panel 150, and outputs the position data to the arithmetic processing unit 200. The position where the input operation is performed on the touch panel 150 refers to a contact position. The position data representing the position refers to touch coordinates. The details of detection of touch coordinates will be described later.

The driver IC 161 is coupled to the display panel 160, inputs rendering data outputted from the arithmetic processing unit 200 to the display panel 160, and displays images, on the display panel 160, based on the rendering data. In this way, GUI operation parts, images, or the like based on the rendering data are displayed on the display panel 160.

The arithmetic processing unit 200 performs various functions of the electronic apparatus 100 by executing programs of the electronic apparatus 100. The programs of the electronic apparatus 100 include a contact coordinate determining program as described below. The arithmetic processing unit 200 also executes processing necessary for the electronic apparatus 100 to perform third generation (3G), fourth generation (4G), Long-Term Evolution (LTE), and Wi-Fi communications.

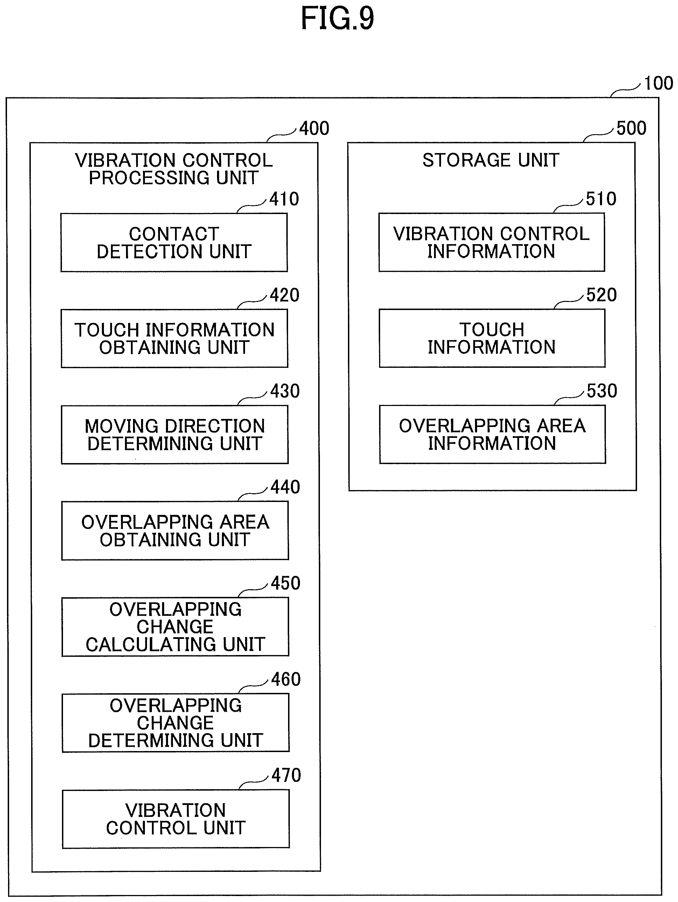

Fig. 9 is a drawing illustrating functions of the electronic apparatus of the first embodiment. The electronic apparatus 100 of the present embodiment includes a vibration control processing unit 400 and a storage unit 500. The arithmetic processing unit 200 executes vibration control programs stored in the memory 210 and the like, and thereby each processing is executed by the vibration control processing unit 400.

The vibration control processing unit 400 of the present embodiment has a contact detection unit 410, a touch information obtaining unit 420, a moving direction determining unit 430, an overlapping area obtaining unit 440, an overlapping change calculating unit 450, an overlapping change determining unit 460, and a vibration control unit 470.

Also, the storage unit 500 of the present embodiment includes vibration control information 510, touch information 520, and overlapping area information 530.

The contact detection unit 410 detects a contact with the input operation part 101. More specifically, an area where the contact detection unit 410 detects a contact with the input operation part 101 is referred to as a contact area.

The touch information obtaining unit 420 obtains touch information 520 and stores the touch information 520 in the storage unit 500. More specifically, the touch information obtaining unit 420 obtains touch information for each predetermined sampling cycle, associates the touch information with the time of when the touch information is obtained, and stores the touch information in the storage unit 500. Therefore, the touch information 520 of the present embodiment includes touch information for each predetermined sampling cycle. Touch information of the present embodiment includes the touch coordinates of the contact area and the size and inclination of the contact area.

The moving direction determining unit 430 determines the moving direction of a contact area using touch coordinates. In other words, the moving direction determining unit 430 determines the direction in which the user's finger traces the surface of the input operation part 101 (hereinafter referred to as the moving direction of the finger).

The overlapping area obtaining unit 440 obtains a value indicating the size of an overlapping area where the contact area overlaps with the image area that displays an object image on the display panel 160, and stores the value as the overlapping area information 530 in the storage unit 500. More specifically, each time touch information is obtained, the overlapping area obtaining unit 440 obtains a value indicating the size of an overlapping area for each predetermined sampling cycle and stores the value in the storage unit 500. Therefore, the overlapping area information 530 of the present embodiment includes values indicating the size of an overlapping area for each predetermined sampling cycle. The details of values indicating the size of the overlapping area will be described later.

The overlapping change calculating unit 450 calculates a change in size of an overlapping area, which changes as the contact area moves. The overlapping change determining unit 460 determines whether a change in size of an overlapping area is an increase or a decrease.

The vibration control unit 470 instructs the drive control IC 300 to control vibrations according to the determination results by the overlapping change determining unit 460.

The vibration control information 510 of the present embodiment is information associated with rendering data and is also associated with values indicating the magnitude of friction between the input operation part 101 and the finger stored for each pixel of an image that is displayed on the display panel 160 based on the rendering data. In the present embodiment, for example, when rendering data is created, the vibration control information 510 may also be created by being associated with the rendering data. Also, the vibration control information 510 of the present embodiment may be received together with the rendering data by the electronic apparatus 100 from an external apparatus. The details of the vibration control information 510 will be described later.

The touch information 520 and the overlapping area information are as described above.

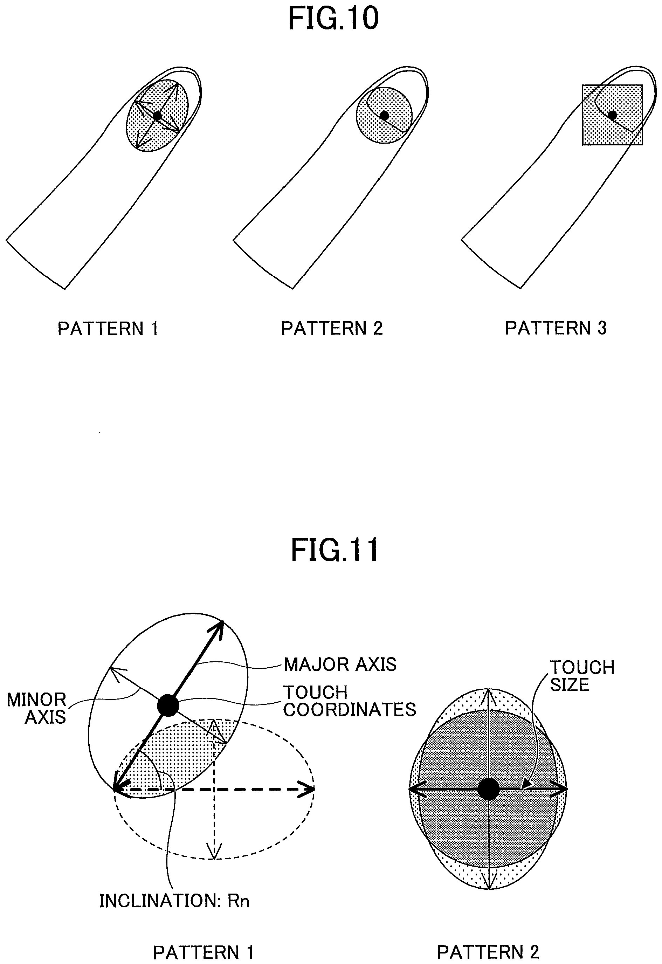

Processing executed by the contact detection unit 410 of the present embodiment will be described below with reference to Fig. 10. Fig. 10 is a drawing illustrating a contact area.

As methods for detecting a contact area, three patterns are illustrated in Fig. 10 by way of example. In the first pattern, a contact area is detected as an ellipse. In this case, the centroid of the contact area is the intersection point of the long and short diameters of the ellipse.

In the second pattern, a contact area is detected as a circle. In this case, the centroid of the contact area is the central point of the circle.

In the third pattern, a contact area is detected as a rectangle. In this case, the centroid of the contact area is the intersection point of the diagonals of the rectangle.

As illustrated in pattern 2, the contact detection unit 410 of the present embodiment may detect a contact area as a circle.

Next, with reference to Fig. 11, processing executed by the touch information obtaining unit 420 will be described. Fig. 11 is a drawing illustrating an example in which touch information is obtained.

Fig. 11 illustrates an example in which a contact area is detected as an ellipse. In this case, the touch information obtaining unit 420 obtains, as touch coordinates, the intersection point of the major axis and minor axis of the ellipse. The touch information obtaining unit 420 also obtains the lengths of the major and minor axes of the ellipse, the inclination of the ellipse, and the size of the ellipse as information accompanying the touch coordinates.

The size Sn of the ellipse may be represented by Sn = (Lln + Sln) / 2, where the major axis is Lln and the minor axis is Sln. Alternatively, The size Sn of the ellipse may be represented by the area of the ellipse.

In addition, when a contact area is detected as a circle or a rectangle, touch information includes information about the coordinates of the centroid of the circle or rectangle as well as a value indicating the size of the circle or rectangle. The value indicating the size may be, for example, the area of the circle or rectangle or may be the diameter of the circle or the width of the rectangle. When a contact area is detected as a circle or a rectangle, processing for obtaining touch information can be simplified.

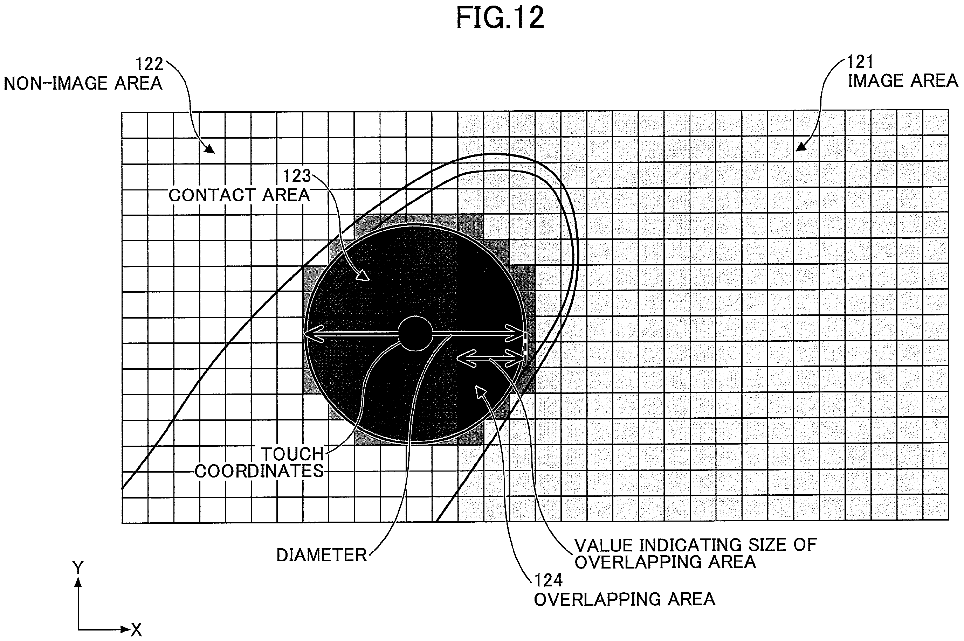

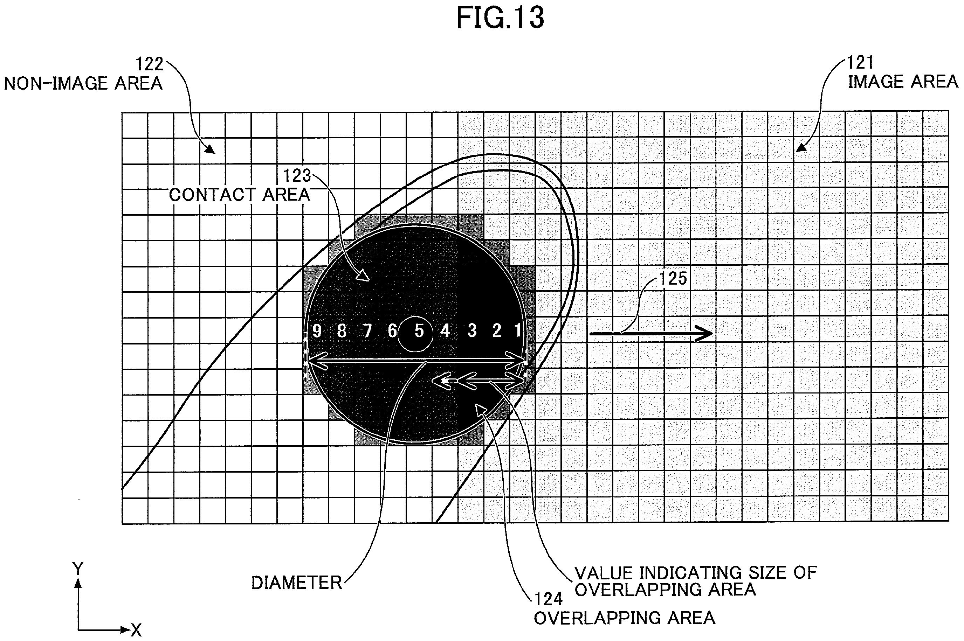

Next, with reference to Fig. 12 and Fig. 13, processing executed by the moving direction determining unit 430, the overlapping area obtaining unit 440, the overlapping change calculating unit 450, and the overlapping change determining unit 460 will be described.

Fig. 12 is a first drawing illustrating a case in which an overlapping area is detected. Fig. 12 illustrates a case in which a contact area is detected as a circle. Also, a grid unit in Fig. 12 corresponds to a pixel on the display panel 160.

Fig. 12 illustrates a case in which a contact area 123 is detected at a position on the display panel 160 that includes an image area 121 where an object image is displayed and a non-image area 122 where an object image is not displayed.

In this case, the touch information obtaining unit 420 obtains the coordinates of the centroid (central point) of the contact area 123 as the touch coordinates, and the size of the contact area 123.

In the example illustrated in Fig. 12, the diameter of the contact area 123 is used as a value indicating the size of the contact area 123. When converted into pixels, the diameter of the contact area 123 is 9 pixels in length.

For example, as the value indicating the size of the overlapping area 124, the overlapping area obtaining unit 440 of the present embodiment obtains the width of the contact area that overlaps with the image area 121 in the direction of the x-axis. In the present embodiment, as the value indicating the size of the overlapping area 124, pixels indicating the width in the direction of the x-axis may be obtained. The direction of the x-axis is the moving direction of the contact area 123. Hereinafter, the value indicating the size of the overlapping area 124 is referred to as an overlap value.

In Fig. 12, when the value indicating the size of the overlapping area 124 is converted into pixels, the value becomes 3 pixels. Therefore, the overlapping area obtaining unit 440 of the present embodiment obtains 3 as the overlap value.

Fig. 13 is a second drawing illustrating a case in which an overlapping area is detected. Fig. 13 illustrates a case in which the contact area 123 moves in the direction of the x-axis.

For example, it is assumed that the contact area 123 moves in the positive direction of the x-axis by the user's operation. The positive direction of the x-axis is the direction indicated by an arrow 125 and is also the direction in which the user's finger moves.

In this case, when the contact area 123 moves in the direction of the arrow 125, the overlap value becomes larger than 3 pixels. For example, if the touch coordinates of the contact area 123 moves in the moving direction of the finger by one pixel, the overlap value becomes 4 pixels.

At this time, the overlapping change calculating unit 450 calculates a value indicating the change in size of the overlapping area 124 based on the overlap values before and after the contact area 123 moves. In the case of Fig. 13, the value indicating the change in size will be 4 pixels - 3 pixels = 1 pixel. Hereinafter, the value indicating the change in size of the overlapping area is referred to as a change value.

Further, the overlapping change determining unit 460 of the present embodiment determines whether the overlapping area 124 has increased or decreased based on the change value. In the case of Fig. 13, the change value of the overlapping area 124 has increased. Therefore, the overlapping change determining unit 460 determines that overlapping area 124 has increased. An increase in the overlapping area 124 means that the user's finger is moving up onto the top of the button from the screen. A decrease in the overlapping area 124 means that the user's finger is moving down from the top of the button onto the screen.

In the present embodiment, as illustrated in Fig. 13, the friction is controlled according to the size of the overlapping area 124 in the moving direction of the finger. Therefore, even if a plurality of object images are displayed (see Fig. 2), the tactile sensation of tracing such a plurality of objects can be produced.

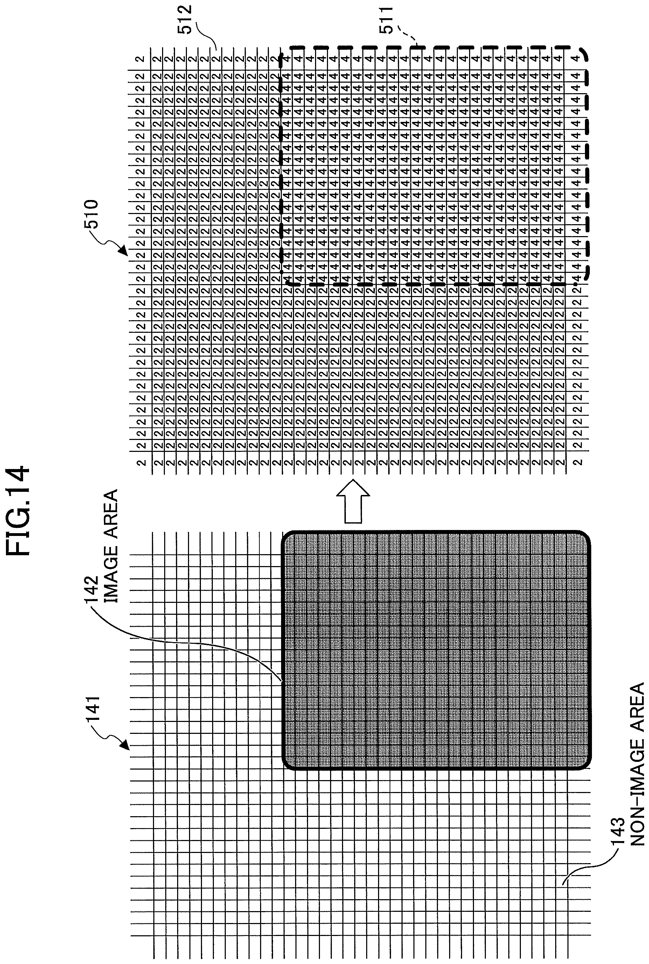

Next, with reference to Fig. 14, the vibration control information 510 of the storage unit 500 of the present embodiment will be described. Fig. 14 is a drawing illustrating vibration control information of the first embodiment.

The vibration control information 510 of the present embodiment is associated with rendering data used to display images on the display panel 160, and is map data that stores friction values for each pixel of an image displayed on the display panel 160.

Fig. 14 illustrates an example of the vibration control information 510 when an image displayed on the display panel 160 is regarded as an image 141.

The vibration control information 510 includes an area 511 that corresponds to an image area 142 of the image 141 and an area 512 that corresponds to a non-image area 143 of the image 141.

In the area 511, friction values are stored for each pixel in the image area 142. In the area 512, friction values are stored for each pixel in the non-image area 143.

In the present embodiment, the friction value of the image area 142 is set to 4. The friction value of the non-image area 143 is set to 2. Therefore, in the area 511 of the vibration control information 510 of the present embodiment, the values of 4 are stored. In the area 512, the values of 2 are stored.

The friction value of the present embodiment represents different levels of amplitude of vibration applied to the input operation part 101 by the drive control IC 300.

For example, when friction values are set from 1 to 5, an amplitude value corresponding to the friction value 5 is the maximum amplitude value of vibration generated by the vibration element 140 in a steady state. Also, an amplitude value corresponding to the friction value 1 is the minimum amplitude value of vibration. In the present embodiment, the friction value of when the vibration generated by the vibration element 140 is stopped may be set to 1.

Furthermore, the minimum value and the maximum value of amplitude are the minimum value and the maximum value of amplitude of vibration that can be provided by the vibration element 140 to the input operation part 101, which will depend on the specifications and the like of the vibration element 140.

For example, the friction between the input operation part 101 and the user's finger decreases as the amplitude value of the vibration increases due to an air lubrication effect. This produces tactile sensations of smoothness. Also, the friction between the input operation part 101 and the user's finger increases as the amplitude value of the vibration decrease. This produces tactile sensations of roughness.

In the present embodiment, a waveform of a vibration generated by the vibration element 140 may be a sine wave, or may be a square wave or the like. In the present embodiment, if a square wave is used as the waveform of the vibration, the effect of an air lubrication becomes more significant and thus a difference in the magnitude of friction becomes clearer.

By controlling the vibration applied to the input operation part 101 of the electronic apparatus 100 of the present embodiment, the friction between the input operation part 101 and the finger can be controlled and the above-described tactile sensations can be produced.

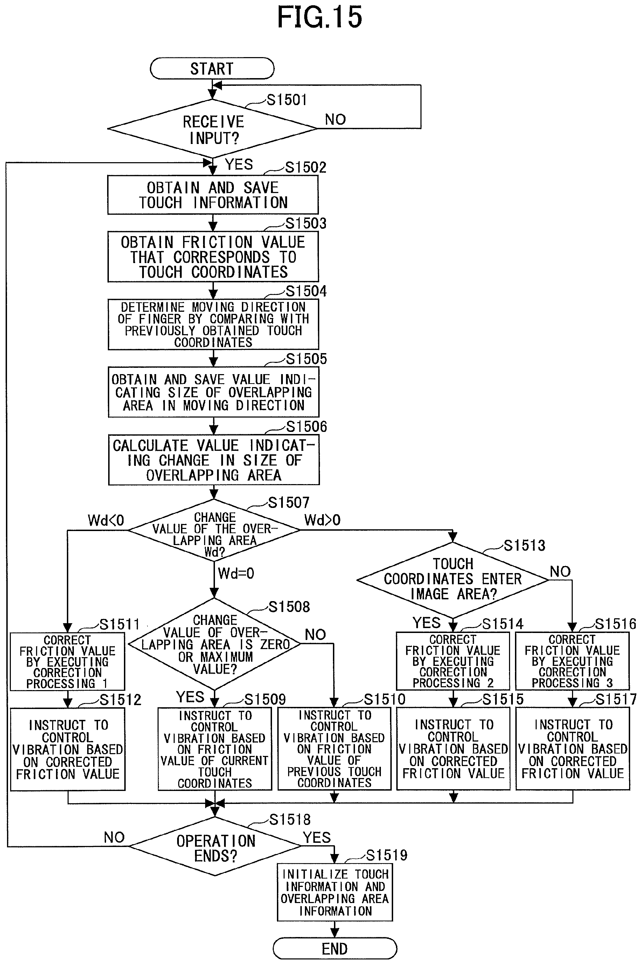

With reference to Fig. 15, processing executed by the vibration control processing unit 400 of the electronic apparatus 100 of the present embodiment will be described below. Fig. 15 is a flowchart illustrating processing executed by the vibration control processing unit of the first embodiment. The processing illustrated in Fig. 15 is executed for each predetermined sampling cycle during which touch information is obtained.

In the vibration control processing unit 400 of the electronic apparatus 100 of the present embodiment, the contact detection unit 410 determines whether the input operation part 101 receives an input (a touch) (step S1501). At this time, a GUI operation part or an image is displayed on the display panel 160 based on the rendering data associated with the vibration control information 510.

In step S1501, if no input is received, the vibration control processing unit 400 waits until an input is received.

When an input is received in step S1501, the vibration control processing unit 400 obtains touch information from the touch information obtaining unit 420 and saves it in the storage unit 500 as the touch information 520 (step S1502). The touch information includes the touch coordinates of the contact area and the value (pixel value) indicating the size of the contact area.

Next, with reference to the vibration control information 510, the vibration control processing unit 400 obtains a friction value of a pixel that corresponds to the touch coordinates (step S1503). Next, the moving direction determining unit 430 of the vibration control processing unit 400 determines the moving direction of the contact area by comparing the touch coordinates obtained in step S502 with the previously obtained touch coordinates included in the touch information saved in the storage unit 500 (step S1504). The term "moving direction of the contact area" refers to the moving direction of the user's finger.

Next, the vibration control processing unit 40 obtains an overlap value in the moving direction of the contact area, and saves the overlap value in the storage unit 500 as overlapping area information 530 (step S1505). The overlap value is represented in pixels that indicate the width of the overlapping area.

Next, the overlapping change calculating unit 450 of the vibration control processing unit 400 calculates a change value Wd by comparing the overlap value obtained in step S1505 with the previously obtained overlap value (step S1506).

Next, when the change value Wd calculated in step S1506 is zero (Wd = 0) (step S1507), the vibration control processing unit 400 determines whether the overlap value obtained in step S1505 is either zero or the maximum value (step S1508). Note that the maximum overlap value is the same as the value indicating the size of the contact area.

When the change value Wd is zero, it means that the entire contact area is located in the non-image area or the entire contact area is located in the image area. To be more specific, this state corresponds to state 1, state 2, state 4, and state 5 of Fig. 3 as well as state 1, state 2, state 4, and state 5 of Fig. 5.

When the overlap value is zero, it means that the contact area does not overlap with the image area. This state corresponds to state 1 and state 2 of Fig. 3 as well as state 4 and state 5 of Fig. 5.

When the overlap value is the maximum value, it means that the entire contact area overlaps with the image area, that is, the contact area is included in the image area. To be more specific, this state corresponds to state 4 of Fig. 3 as well as state 1 and state 2 of Fig. 5.

In step S1508, when the overlap value is determined to be either zero or the maximum value, the vibration control unit 470 of the vibration control processing unit 400 instructs the drive control IC 300 to control the vibration based on the friction value that corresponds to the current touch coordinates obtained in step S1503 (Step S1509). In other words, the vibration control unit 470 instructs the drive control IC 300 to control generation of the vibration that has the amplitude value corresponding to the friction value of the current touch coordinates. Subsequently, the vibration control processing unit 400 proceeds to step S1518 described below.

In step S1508, when the overlap value is determined to be neither zero nor the maximum value, the vibration control unit 470 of the vibration control processing unit 400 instructs the drive control IC 300 to control the vibration based on the friction value of the previous touch coordinates (step S1510). Subsequently, the vibration control processing unit 400 proceeds to step S15189.

When the change value Wd is a negative value in step S1507, the vibration control unit 470 of the vibration control processing unit 400 corrects the friction value obtained in step S1503 by executing the correction processing 1 (step S1511). Subsequently, the vibration control unit 470 instructs the drive control IC 300 to control the vibration based on the corrected friction value (step S1512) and proceeds to step S1518 described later.

When the change value Wd is a negative value, it means that the overlapping area is becoming smaller. Namely, the finger is moving from state 2 to state 4 in Fig. 5. To be more specific, the finger is moving from the state in which the finger is fully placed on the top of the button, through the state in which the finger starts to move down toward the screen 3, to the state in which the finger is placed on the screen 3.

Therefore, the vibration control unit 470 executes the correction processing 1 to correct the friction value based on the relationship between the friction value and the size of the overlapping area when the finger moves from state 2 to state 4 as illustrated in Fig. 6. The details of the correction processing 1 will be described later.

In step S1507, when the change value Wd is a positive value, the vibration control unit 470 of the vibration control processing unit 400 determines whether the touch coordinates enters the image area (step S1513). Namely, the vibration control unit 470 determines whether the touch coordinates are located in the image area.

In step S1513, when the touch coordinates are located in the image area, the vibration control unit 470 corrects the friction value obtained in step S1503 by executing correction processing 2 (step S1514). Subsequently, the vibration control unit 470 instructs the drive control IC 300 to control the vibration based on the corrected friction value (step S1515) and proceeds to step S1518 described later.

When the change value Wd is a positive value, it means that the overlapping area is becoming larger. Also, when the change value Wd is a positive value and the touch coordinates are located in the image area, it means that the finger is moving from state 3 to state 4 in Fig. 3. Namely, the finger is moving from the state in which the finger moves up onto the edge of the button to the state in which the finger is fully placed on the top of the button.

Therefore, the vibration control unit 470 executes the correction processing 2 to correct the friction value based on the relationship between the friction value and the size of the overlapping area when the finger moves from state 3 to state 4 as illustrated in Fig. 4.

In step S1513, the touch coordinates are not located in the image area, the vibration control unit 470 corrects the friction value obtained in step S1503 by executing correction processing 3 (step S1516). Subsequently, the vibration control unit 470 instructs the drive control IC 300 to control the vibration based on the corrected friction value (step S1517) and proceeds to S1519.

When the change value Wd is a positive value and the touch coordinates are not located in the image area, it means that the finger is moving from state 2 to state 3 in Fig. 3. Namely, the finger is moving from the state in which the finger is on the screen to the state in which the finger moves up onto the button.

Therefore, the vibration control unit 470 executes correction processing 3 to correct the friction value based on the relationship between the friction value and the size of the overlapping area when the finger moves from state 2 to state 3 as illustrated in Fig. 4. The details of the correction processing 3 will be described later.

Next, the contact detection unit 410 of the vibration control processing unit 400 determines whether the operation on the input operation part 101 ends (step S1518). To be more specific, when no contact with the input operation part 10 is detected, the contact detection unit 410 determines that the input operation has ended.

In step S1518, when the input operation has not ended, that is, a contact area has been detected, the vibration control processing unit 400 returns to step S1502.

In step S1518, when the input operation has ended, the vibration control processing unit 400 initializes the touch information 520 and overlapping area information 530 (step S1519) and ends the processing.

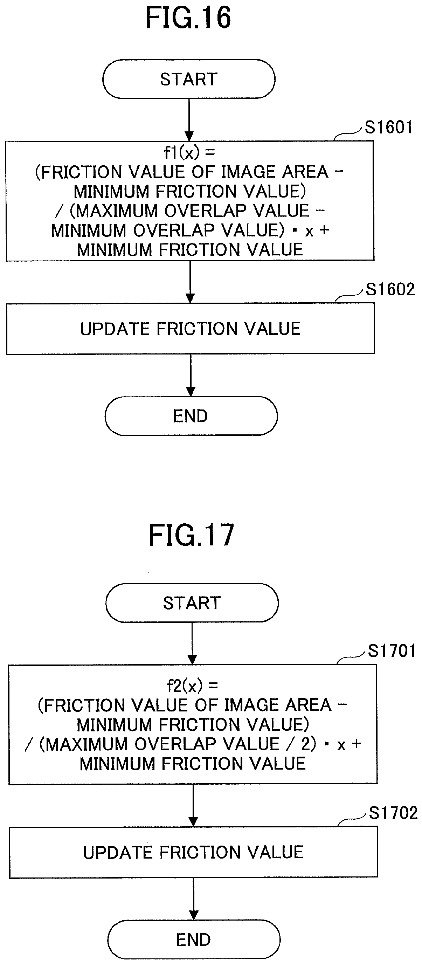

Next, with reference to Figs. 16 through 18, the correction processing 1 to 3 for friction values will be described. Fig. 16 is a flowchart illustrating the correction processing 1.

The vibration control unit 470 of the present embodiment calculates a friction value that corresponds to the overlap value obtained in step S1505 by determining a function f1 (x) that expresses the relationship between the friction value and size of the overlapping area when the finger moves from state 2 to state 4 as illustrated in Fig. 6 (step S1601).

Next, the vibration control unit 470 replaces the friction value obtained in step S1505 with the corrected friction value (step S1602) and ends the processing.

The processing in step S1601 will be described below. The function f1(x) determined in step S1601 is a friction value, where x is an overlap value. As can be seen from Fig. 6, the function f1 (x) is a linear function.

Therefore, the function f1(x) is expressed by the following formula (1):

$$f1(x) = (\text{friction value of image area} - \text{minimum friction value}) \, /$$
$$(\text{maximum overlap value} - \text{minimum overlap value}) \cdot x$$
$$+ \text{minimum friction value}$$
$$[\text{formula (1)}]$$

Using the formula 1, the vibration control unit 470 substitutes the overlap value obtained in step S1505 into the function f1(x) in order to calculate a friction value corresponding to the overlap value when the finger moves from state 2 to state 4 as illustrated in Fig. 6.

Fig. 17 is a flowchart illustrating the correction processing 2.

The vibration control unit 470 of the present embodiment calculates a friction value that corresponds to the overlap value obtained in step S1505 by determining a function f2(x) that expresses the relationship between the friction value and size of the overlapping area when the user's finger moves from state 3 to state 4 as illustrated in Fig. 4 (step S1701).

Next, the vibration control unit 470 replaces the friction value obtained in step S1505 with the corrected friction value (step S1702) and ends the processing.

The processing in step S1701 will be described below. As can be seen from Fig. 4, the function f2(x) determined in S1701 is a linear function.

Therefore, the function f2(x) is expressed by the following formula (2):

$$f2(x) = (\text{friction value of image area} - \text{minimum friction value}) \, /$$
$$(\text{maximum overlap value} - \text{maximum overlap value} \, / \, 2) \cdot x$$
$$+ \text{minimum friction value}$$
$$[\text{formula (2)}]$$

Using the formula 2, the vibration control unit 470 substitutes the overlap value obtained in step S1505 into the function f2(x) in order to calculate a friction value corresponding to the overlap value between state 3 and state 4 as illustrated in Fig. 4.

In the formula 2 expressing the function f2(x) of the present embodiment, the second term is set to "minimum friction value," but is not limited thereto.

For example, in the formula 2 expressing the function f2(x), the second term may be set to "2 x minimum friction value - friction value of non-image area."

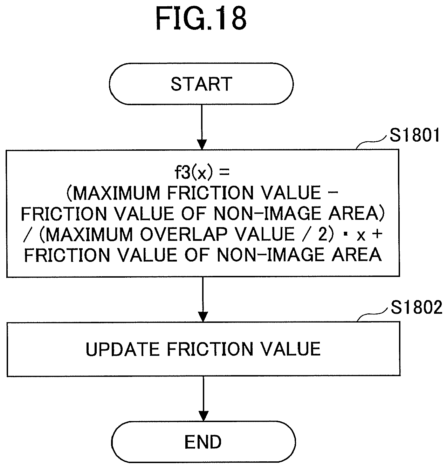

Fig. 18 is a flowchart illustrating the correction processing 3.

The vibration control unit 470 of the present embodiment calculates a friction value that corresponds to the overlap value obtained in step S1505 by determining a function f3(x) that expresses the relationship between the friction value and size of the overlapping area when the finger moves from state 2 to state 3 as illustrated in Fig. 4 (step S1801).

Next, the vibration control unit 470 replaces the friction value obtained in step S1505 with the corrected friction value (step S1802) and ends the processing.

The processing in step S1501 is described below. As can be seen from Fig. 4, the function f3(x) determined in step S1501 is a linear function.

Therefore, the function f3(x) is expressed by the following formula (3):

$$f3(x) = (\text{maximum friction value} - \text{friction value of non-image area}) /$$
$$(\text{maximum overlap value} / 2) \cdot x$$
$$+ \text{friction value of non-image area}$$
$$[\text{formula (3)}]$$

Using this formula 3, the vibration control unit 470 substitutes the overlap value obtained in step S1505 into the function f3(x) in order to calculate a friction value corresponding to the overlap value between state 3 and state 3 as illustrated in Fig. 6.

It should be noted that in the present embodiment, the functions f1(x), f2(x), and f3(x) are each expressed by a linear function, but are not limited thereto, and may be expressed by a quadratic function.

As described above, in the present embodiment, control for producing the tactile sensation of the finger moving up onto the button is different from control for producing the tactile sensation of the finger moving down from the top of the button onto the screen. Moreover, in the present embodiment, the distinct tactile sensation of projections and recesses can be produced by changing the type and intensity (amplitude) of the change applied to the finger.

Therefore, according to the present embodiment, changes in friction when the users' finger moves up onto an object such as a button can be produced.

Also, in the present embodiment, the size of an overlapping area is represented in pixels by the width of a contact area in the moving direction, but is not limited thereto. The size of an overlapping area of the present embodiment may be, for example, the area of an overlapping area.

[Second Embodiment]

A second embodiment will be described below with reference to the drawings. The second embodiment differs from the first embodiment only in that information about the height of an image area is provided in association with friction values of the image area. Therefore, in the second embodiment, only differences from the first embodiment will be described. Therefore, constituent elements having the same functional constitutions as the first embodiment are designated by the same reference numerals used in the first embodiment, and thus the descriptions thereof are omitted.

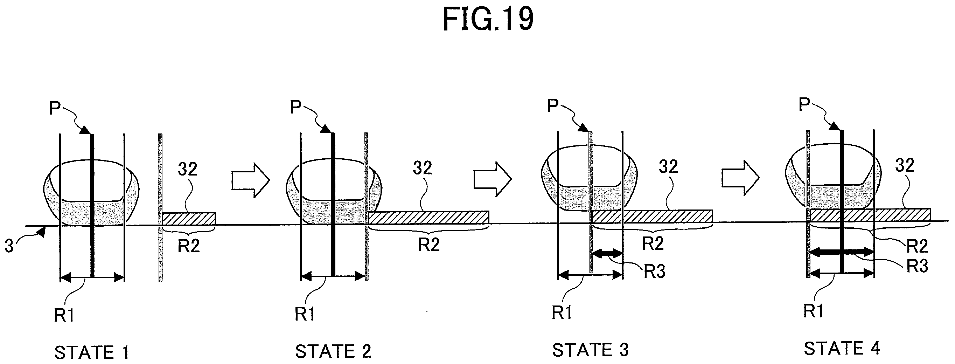

Fig. 19 is a first drawing illustrating the production of a tactile sensation of the second embodiment. In Fig. 19, when an object image 32 is assumed to be a three-dimensional button, height information about the height H of the button is associated with the vibration control information 510. States 1 to 4 in Fig. 19 are the same as states 1 to 4 in Fig. 3, and thus the descriptions thereof are omitted.

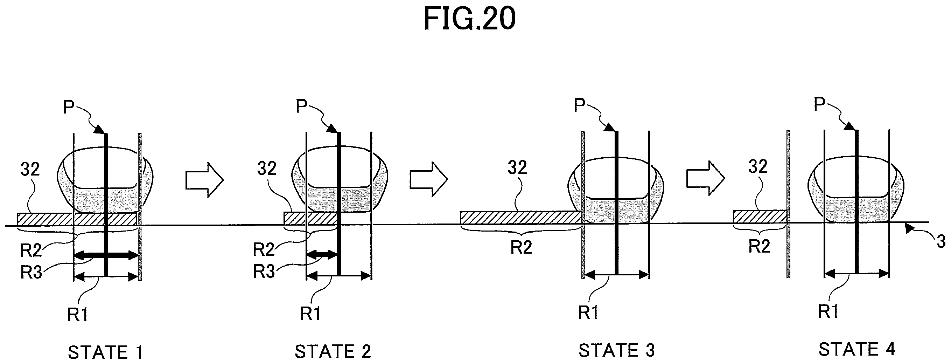

Fig. 20 is a second drawing illustrating the production of a tactile sensation of the second embodiment. In Fig. 20, similarly to Fig. 19, the vibration control information 510 includes information about the height H of the object image 32. States 1 to 4 in Fig. 20 are the same as state 2 to 5 in Fig. 3, and thus the descriptions thereof are omitted.

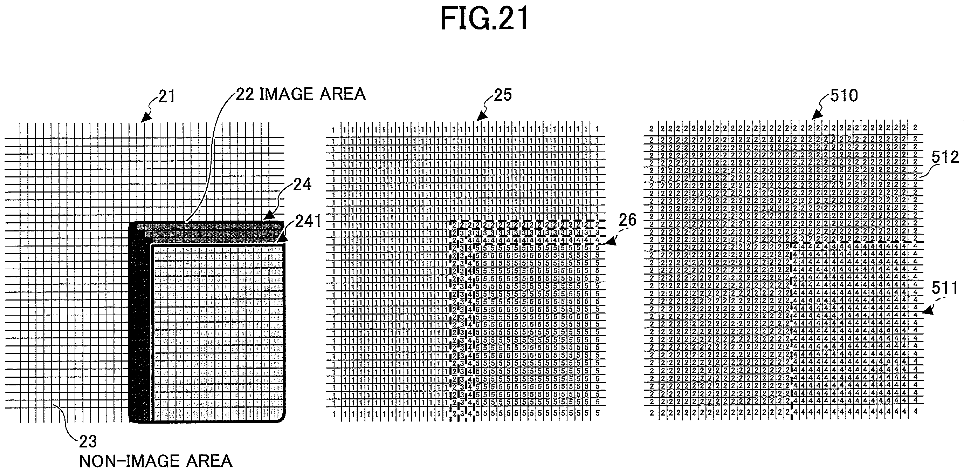

Fig.21 is a drawing illustrating the height information associated with the vibration control information. Fig. 21 illustrates an example of the vibration control information 510 in which an image displayed on a display panel 160 is an image 21.

In the present embodiment, the height information 25 associated with the image 21 is illustrated. The height information 25 is associated with rendering data used to display an image on the display panel 160, and is associated with the vibration control information 510. The height information 25 is map data that includes values indicating the height for each pixel of an image displayed on the display panel 160. Similarly to the vibration control information 510, when rendering data is created, the height information 25 of the present embodiment is created by being associated with the rendering data.

The image 21 of the present embodiment includes an image area 22 that displays an object image 32 as a button 24, and includes a non-image area 23 that does not display the object image 32.

For each pixel in the image area 22, values indicating the height of the object image 32 are included in the height information 25 of the present embodiment.

As can be seen from Fig. 21, when a value indicating the height of the non-image area 23 that does not display the object image 32 is set to 1, the height of the object image 32 is indicated in four levels of 2, 3, 4, and 5. The maximum value of the height information 25 is 5. This maximum value indicates the height of an area 26 that corresponds to an area 241 representing an upper surface of the button 24. Therefore, it can be seen that the area 241 is the highest in the image 21.

The vibration control information 510 of the present embodiment includes an area 511 that corresponds to the area 26 having the maximum height value of the height information 25, and includes an area 512 that corresponds to the non-image area 23 of the image 21.

In the area 511, friction values for each pixel in the area 241 are stored. In the area 512, friction values for each pixel in the non-image area 23 are stored.

In the present embodiment, the friction is controlled according to the size of an area where an image area 24 overlaps with a contact area. Therefore, even without different levels of friction values, it is possible to produce the tactile sensation of tracing the object image 32 as if the user's finger was gradually going up onto the upper surface of the button 24.

[Third Embodiment]

A third embodiment will be described below with reference to the drawings. In the third embodiment, a vibration waveform in the ultrasonic frequency band is used to produce a tactile sensation. In the following third embodiment, constituent elements having the same functional constitutions as the first embodiment are designated by the same reference numerals used in the first embodiment, and thus the descriptions thereof are omitted.

In the present embodiment, the waveform in the ultrasonic frequency band is used to provide tactile sensations of the finger moving up onto a three-dimensional object image and of the finger moving down from the object image onto the screen.

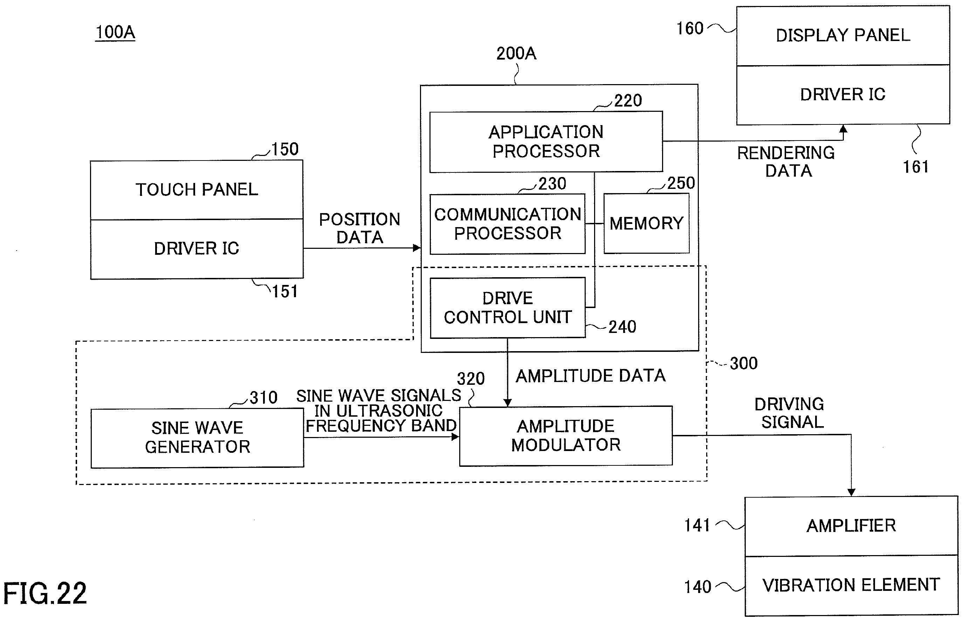

Fig. 22 is a drawing illustrating the configuration of an electronic apparatus of the third embodiment. An arithmetic processing unit 200 of an electronic apparatus 100A includes an application processor 220, a communication processor 230, a drive control unit 240, and memory 250. Furthermore, the memory 250 may include memory 210. Alternatively, the memory 210 may include the memory 250. In addition, the drive control unit 240, a sine wave generator 310, and an amplitude modulator 320 constitute a drive control IC 300.

The present embodiment describes an exemplary configuration in which the single arithmetic processing unit 200 is implemented by the application processor 220, the communication processor 230, the drive control unit 240, and the memory 250. However, the drive control unit 240 may be provided as part of the drive control IC 300 provided outside the arithmetic processing unit 200 as a separate IC chip or processor. In this case, of data stored in the memory 250, necessary data for drive control of the drive control unit 240 may be stored in a separate memory from the memory 250. The separate memory may be provided inside the drive control IC 300.

The application processor 220 of the present embodiment executes various applications of the electronic apparatus 100A. Various applications include applications used to display three-dimensional object images, for example.

The communication processor 230 executes processing necessary for the electronic apparatus 100A to perform communications such as 3G, 4G, Long-Term Evolution (LTE), and Wi-Fi communications.

The drive control unit 240 outputs amplitude data to the amplitude modulator 320 when two predetermined conditions are met as described below. The amplitude data represents an amplitude value that controls the intensity of driving signals used to drive the vibration element 140. The amplitude value is set according to the degree of time variation of the position data. As the degree of time variation, the moving speed of the user's fingertip along the surface of the top panel 120, which will be described later, is used herein. The position data of the present embodiment refers to touch coordinates. The moving speed of the user's fingertip is calculated by the drive control unit 240 based on the degree of time variation of the position data inputted from the driver IC 151. In addition, first data is stored in the memory 250. The first data represents the relationship between the amplitude data representing an amplitude value and the moving speed. Furthermore, the position data of the present embodiment may be directly inputted from the driver IC 151 into the drive control unit 240.

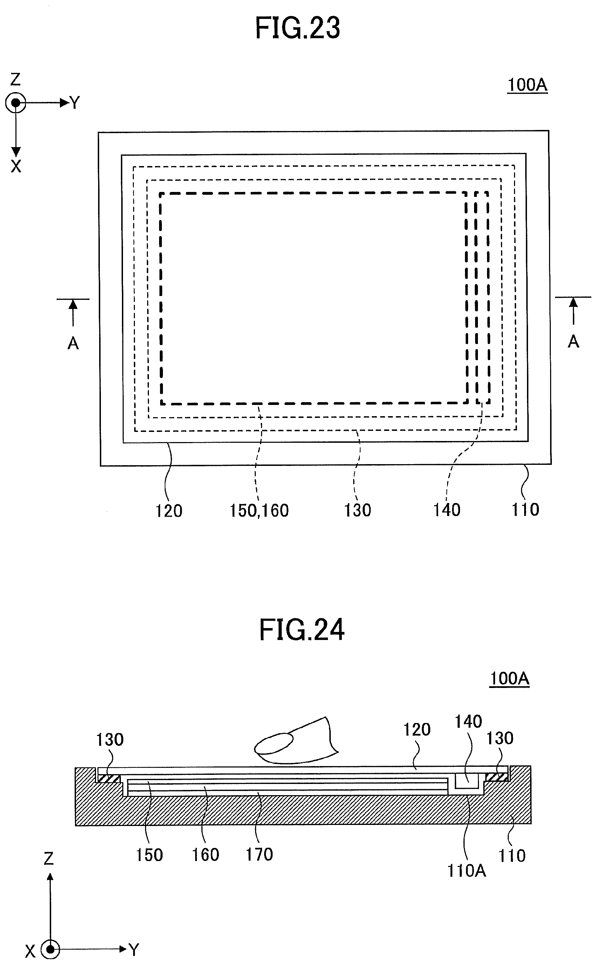

Next, the configuration of the electronic apparatus 100A will be specifically described with reference to Fig. 23 and Fig. 24. Fig. 23 is a plan view of the electronic apparatus of the third embodiment. Fig. 24 is a cross-sectional view of the electronic apparatus taken along line A-A of Fig. 23. As illustrated in Fig. 23 and Fig. 24, a XYZ coordinate system, which is a rectangular coordinate system, is defined.

The electronic apparatus 100A includes a housing 110, the top panel 120, a double-sided adhesive tape 130, a vibration element 140, a touch panel 150, a display panel 160, and a substrate 170.

The housing 110 is made of a resin, for example. As illustrated in Fig. 24, the substrate 170, the display panel 160, and the touch panel 150 are provided in a recessed portion 110A, and the top panel 120 is bonded to the housing 110 with the double-sided adhesive tape 130.

The top panel 120 is a thin, flat member having a rectangular shape when seen in a plan view and made of transparent glass or reinforced plastics such as polycarbonate. A surface (on a positive side in the z-axis direction) of the top panel 120 is an exemplary operation surface where an input operation is performed by the user of the electronic apparatus 100A.

The vibration element 140 is bonded to a surface on a negative side in the z-axis direction of the top panel 120. The four sides of the top panel 120 when seen in a plan view are bonded to the housing 110 with the double-sided adhesive tape 130. The double-sided adhesive tape 130 may be any double-sided tape that can bond the four sides of the top panel 120 to the housing 110.

The touch panel 150 is disposed on the negative side in the z-axis direction of the top panel 120. The top panel 120 is provided to protect the surface of the touch panel 150. Also, an additional panel, a protective film, and the like may be separately provided on the surface of the top panel 120.

With the vibration element 140 being bonded to the surface on the negative side in the z-axis direction of the top panel 120, the top panel 120 vibrates when the vibration element 140 is driven. In the present embodiment, a standing wave is generated on the top panel 120 by vibrating the top panel 120 at a natural vibration frequency. However, in practice, because the vibration element 140 is bonded to the top panel 120, it is preferable to determine a natural vibration frequency after taking into account the weight and the like of the vibration element 140.

The vibration element 140 is bonded to the surface on the negative side in the z-axis direction of the top panel 120, at the positive side in the y-axis direction, along the short side extending in an x-axis direction. The vibration element 140 may be any element as long as it can generate vibrations in the ultrasonic frequency band. For example, the vibration element 140 may use any element including piezoelectric elements or piezo elements.

The vibration element 140 is driven by a driving signal outputted from the drive control unit described later. The amplitude (intensity) and frequency of a vibration generated by the vibration element 140 are set by the driving signal. In addition, an on/off action of the vibration element 140 is controlled by the driving signal.

The ultrasonic frequency band is referred to as a frequency band of approximately 20 kHz or more. In the electronic apparatus 100 of the present embodiment, a frequency at which the vibration element 140 vibrates is equal to a natural frequency of the top panel 120. Therefore, the vibration element 140 is driven by the driving signal so as to vibrate at the natural frequency of the top panel 120.

The touch panel 150 is disposed on (the positive side in the z-axis direction of) the display panel 160 and under (the negative side in the z-axis direction of) the top panel 120. The touch panel 150 is illustrated as an example of a coordinate detection unit that detects a position at which the user of the electronic apparatus 100A touches the top panel 120 (hereinafter referred to as an input operation position).

Various GUI buttons and the like (hereinafter referred to as GUI operation parts) are displayed on the display panel 160 disposed under the touch panel 150. Therefore, the user of the electronic apparatus 100A touches the top panel 120 with the fingertip when operating GUI operation parts.

The touch panel 150 may be a coordinate detection unit that can detect an input operation position of the user on the top panel 120. For example, the touch panel 150 may be a capacitance type or a resistive type coordinate detection unit. The present embodiment describes a case in which the touch panel 150 is a capacitance type coordinate detection unit. Even if there is a gap between the touch panel 150 and the top panel 120, the touch panel 150 can detect an input operation performed on the top panel 120.

Also, in the present embodiment, the top panel 120 is disposed on the input surface side of the touch panel 150. However, the top panel 120 may be integrated into the touch panel 150. In this case, the surface of the touch panel 150 becomes the surface of the top panel 120 as illustrated in Fig. 23 and Fig. 24, and thus becomes the operation surface. In addition, the top panel 120 illustrated in Fig. 23 and Fig. 24 may be omitted. The surface of the touch panel 150 becomes the operation surface in this case as well. In this case, the panel having the operation surface may be vibrated at a natural frequency of that panel.

Furthermore, if the touch panel 150 is a capacitance type touch panel, the touch panel 150 may be disposed on the top panel 120. The surface of the touch panel 150 becomes the operation surface in this case as well. If the touch panel 150 is a capacitance type, the top panel 120 illustrated in Fig. 23 and Fig. 24 may be omitted. The surface of the touch panel 150 becomes the operation surface in this case as well. In this case, the panel having the operation surface may be vibrated at a natural frequency of that panel.

The display panel 160 may be any display unit that can display images, such as a liquid crystal display panel or an organic electroluminescence (EL) panel. The display panel 160 is placed inside the recessed portion 110A of the housing 110 and placed on the substrate 170 (positive z-axis direction side) using a holder and the like, although not illustrated.

The display panel 160 is driven and controlled by the driver IC 161, which will be described later, and displays GUI operation parts, images, characters, symbols, figures, and the like according to the operating condition of the electronic apparatus 100A.

The substrate 170 is disposed inside the recessed portion 110A of the housing 110. On the substrate 170, the display panel 160 and the touch panel 150 are disposed. The display panel 160 and the touch panel 150 are fixed to the substrate 170 and housing 110 using the holder and the like, although not illustrated.

In addition to the drive control IC 300, various circuits necessary to drive the electronic apparatus 100A are mounted on the substrate 170.

In the above-described electronic apparatus 100A, when the user's finger touches the top panel 120 and the movement of the fingertip is detected, the drive control unit mounted on the substrate 170 drives the vibration element 140 to vibrate the top panel 120 at a frequency in the ultrasonic frequency band. The frequency in the ultrasonic frequency band is a resonance frequency of a resonance system that includes the top panel 120 and the vibration element 140. At this frequency, a standing wave is generated on the top panel 120.

The electronic apparatus 100A provides the user with tactile sensations through the top panel 120 by generating standing waves in the ultrasonic frequency band.

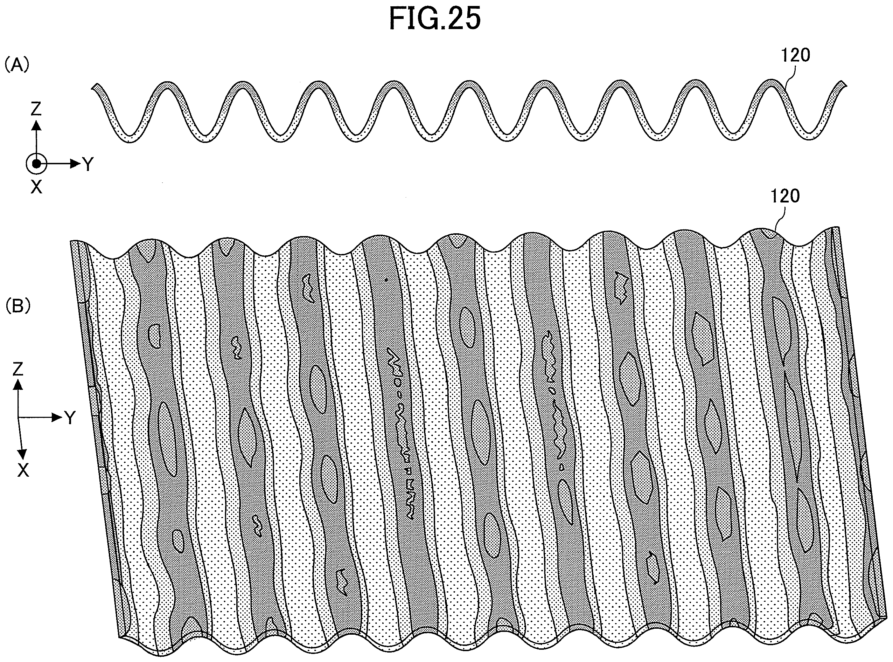

Next, standing waves generated on the top panel 120 will be described with reference to Fig. 25.

Fig. 25 is a drawing illustrating crests of a standing wave formed in parallel with the short side of the top panel, of standing waves generated by a natural vibration in the ultrasonic frequency band. Fig. 25(A) is a side view and Fig. 25(B) is a perspective view. The same XYZ coordinates as those described in Fig. 23 and Fig. 24 are defined in Fig. 25(A) and (B). Moreover, to facilitate understanding, the amplitude of the standing wave is exaggeratingly illustrated in Fig. 25(A) and (B). In addition, the vibration element 140 is omitted in Fig. 25(A) and (B).

The natural frequency (resonance frequency) f of the top panel 120 is expressed by the following formals (4) and (5), where E is the Young's modulus, ρ is the density, δ is the Poisson's ratio, 1 is the length of a long side, t is the thickness, and k is a periodic number of the standing wave generated along the direction of the long side. Because the standing wave has the same waveforms in every half cycle, the periodic number k takes values in increments of 0.5 (i.e., 0.5, 1, 1.5, 2, etc.).

$$f = \frac{\pi k^2 t}{l^2} \sqrt{\frac{E}{3\rho(1-\delta^2)}} \qquad (4)$$

$$f = \alpha k^2 \qquad (5)$$

It should be noted that the coefficient $\alpha$ included in the formula 5 corresponds to other coefficients than $k^2$ included in the formula 4.

The waveform of the standing wave in Fig. 25(A) and (B) is provided as an example in which the periodic number k is 10. For example, if Gorilla™ glass having the length of a long side 1 of 140 mm, length of a short side of 80mm, and thickness t of 0.7 mm is used as the top panel 120 and if the periodic number k is 10, the natural frequency f will be 33.5 kHz. In this case, a driving signal whose frequency is 33.5 kHz may be used.

Although the top panel 120 is a flat member, when the vibration element 140 (see Fig. 23 and Fig. 24) is driven to generate a natural vibration in the ultrasonic frequency band, the top panel 120 bends, and as a result, a standing wave is generated on the surface as illustrated in Fig. 25(A) and (B).

In the present embodiment, the example in which the single vibration element 140 is bonded to the surface on the negative side in the z-axis direction of the top panel 120, at the positive side in the y-axis direction, along the short side extending in the x-axis direction will be described. However, two vibration elements 140 may be used. If two vibration elements 140 are used, another vibration element 140 may be bonded to the surface on the negative side in the z-axis direction of the top panel 120 along the short side extending in the x-axis direction on the negative side in the y-axis direction. In this case, two vibration elements 140 are axisymmetrically disposed with respect to a centerline parallel to the two short sides of the top panel 120.

In a case where the two vibration elements 140 are driven, the two vibration elements 140 may be driven in the same phase if the periodic number k is an integer. If the periodic number k is an odd integer, the two vibration elements 140 may be driven in opposite phases.

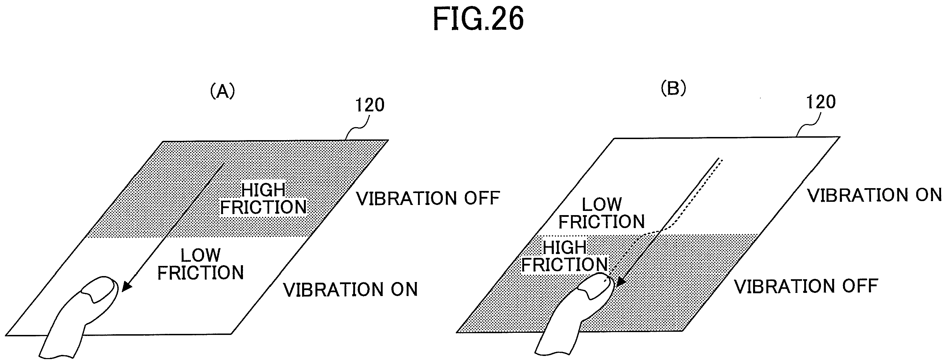

Next, the natural vibration in the ultrasonic frequency band generated on the top panel 120 of the electronic apparatus 100A will be described with reference to Fig. 26.

Fig. 26 is a drawing illustrating cases in which a kinetic friction force applied to the fingertip of the user who performs an input operation changes by the natural vibration in the ultrasonic frequency band generated on the top panel of the electronic apparatus. In Fig. 26(A) and (B), while touching the top panel 120 with the user's fingertip, the user performs an input operation by moving the finger toward the near side from the far side of the top panel 120 as illustrated in the direction of an arrow. The vibration can be switched on and off by turning on and off the vibration element 140.

In addition, in Fig. 26(A) and (B), when seen in the depth direction, sides that user's finger touches while the vibration is turned off are represented in gray and sides that user's finger touches while the vibration is turned on are represented in white.

As can be seen from Fig. 25, the natural vibration in the ultrasonic frequency band is generated on the entire top panel 120. However, Fig. 26(A) and (B) illustrate operation patterns in which the vibration is switched on and off when the user's finger moves toward the near side from the far side of the top panel 120.

In light of the above, in Fig. 26(A) and (B), the sides of the top panel 120 that user's finger touches while the vibration is turned off are represented in gray and the sides of the top panel 120 that user's finger touches while the vibration is turned on are represented in white.

In an operation pattern illustrated in Fig. 26(A), the vibration is turned off when the user's finger is located on the far side of the top panel 120, and the vibration is turned on while the user's finger moves toward the near side.

In an operation pattern illustrated in Fig. 26(B), the vibration is turned on when the user's finger is located on the far side of the top panel 120, and the vibration is turned off while the user's finger moves toward the near side.

At this time, when the natural vibration in the ultrasonic frequency band is generated on the top panel 120, an air layer is present by a squeeze effect between the surface of the top panel 120 and the finger. As a result, a kinetic friction coefficient decreases when the user's finger traces the surface of the top panel 120.

Therefore, in Fig. 26(A), the kinetic friction force applied to the fingertip increases on the far side of the top panel 120 represented in gray. The kinetic friction force applied to the fingertip decreases on the near side of the top panel 120 represented in white.

Therefore, the user who performs the input operation as illustrated in Fig. 26(A) senses that the kinetic friction force applied to the fingertip is decreased when the vibration is turned on. As a result, the user feels a sense of slipperiness with the finger. In this case, because the surface of the top panel 120 becomes more slippery, the user senses as if a recessed portion exists on the surface of the top panel 120 when the kinetic friction force decreases.

In Fig. 26(B), the kinetic friction force applied to the fingertip decreases on the far side of the top panel 120 represented in white. The kinetic friction force applied to the fingertip increases on the near side of the top panel 120 represented in gray.

Therefore, the user who performs the input operation as illustrated in Fig. 26(B) senses that the kinetic friction force applied to the fingertip is increased when the vibration is turned off. As a result, the user feels a sense of non-slipperiness or roughness with the finger. In this case, because the surface of the top panel 120 becomes of higher roughness, the user senses as if a projecting portion exists on the surface of the top panel 120 when the kinetic friction force increases.

As described above, the user can sense projections and recesses with the fingertip in the cases illustrated in Fig. 26(A) and (B). For example, a person's tactile sensation of projections and recesses is disclosed in "The Printed-matter Typecasting Method for Haptic Feel Design and Sticky-band Illusion," (The collection of papers of the 11th SICE system integration division annual conference (SI2010, Sendai), December 2010, pages 174 to 177). A person's tactile sensation of projections and recesses is also disclosed in "The Fishbone Tactile Illusion" (Collection of papers of the 10th Congress of the Virtual Reality Society of Japan, September, 2005).

Although changes in the kinetic friction force when the vibration is switched on and off have been described above, similar effects can be obtained when the amplitude (intensity) of the vibration element 140 is changed.

Next, the relationship between the amplitude data representing an amplitude value and the moving speed of the fingertip will be described.

In the drive control IC 300 of the present embodiment, as an example, in order to make the tactile sensation provided to the user' fingertip constant regardless of its moving speed, the higher the moving speed is, the smaller the amplitude value is set, and the lower the moving speed is, the larger the amplitude value is set.

Further, in the present embodiment, the first data is used to set an amplitude value according to the moving speed. However, the following formula (6) may be used to calculate an amplitude value. The amplitude value A calculated by the following formula (6) becomes smaller as the moving speed becomes higher and the amplitude value A becomes larger as the moving speed becomes smaller.

$$A = A_0 / \sqrt{|V|/a} \qquad (6)$$

In the formula 6, $A_0$ is a reference value of the amplitude, V is the moving speed of the fingertip, and a is a predetermined constant value. When the amplitude value A is calculated by using the formula 6, data representing the formula 6 and also data representing the reference value $A_0$ and the predetermined constant value a may be stored in the memory 250.

In addition, the drive control IC 300 vibrates the top panel 120 in order to change in the kinetic friction force applied to the user's fingertip when the user's fingertip traces along the surface of the top panel 120. Such a kinetic friction force is generated while the fingertip is moving. Therefore, the drive control unit 240 causes the vibration element 140 to vibrate when the moving speed becomes equal to or greater than a predetermined threshold speed. The first predetermined condition is that the moving speed is greater than or equal to the predetermined threshold speed.

The amplitude value represented by the amplitude data outputted from the drive control unit 240 becomes zero when the moving speed is less than the predetermined threshold speed. The amplitude value is set to a predetermined amplitude value according to the moving speed when the moving speed becomes equal to or greater than the predetermined threshold speed. In a case where the moving speed becomes equal to or greater than the predetermined threshold speed, the higher the moving speed is, the smaller the amplitude value is set, the lower the moving speed is, the larger the amplitude value is set.

Further, the drive control IC 300 outputs the amplitude data to the amplitude modulator 320 when the position of the user's fingertip performing an input operation is located in a predetermined area where a vibration is to be generated. The second predetermined condition is that the position of the user's fingertip performing an input operation is located in a predetermined area where a vibration is to be generated.

Whether or not the position of the fingertip performing an input operation is located in a predetermined area where a vibration is to be generated is determined based on whether or not the positon of the fingertip performing the input operation is located in the predetermined area.

A position of a GUI operation part displayed on the display panel 160, a position of an area that displays an image, a position of an area representing an entire page, and the like on the display panel 160 are identified by area data representing such areas. The area data exists in all applications for each GUI operation part displayed on the display panel 160, for each area that displays an image, and for each area that displays an entire page.

Therefore, a type of an application executed by the electronic apparatus 100A is relevant in determining, as the second predetermined condition, whether the position of the user's fingertip performing an input operation is located in a predetermined area where a vibration is to be generated. This is because displayed contents of the display panel 160 differ depending on the type of the application.

This is also because a type of an input operation, which is performed by moving the fingertip along the surface of the top panel 120, differs depending on the type of the application. One type of input operations performed by moving the finger along the surface of the top panel 120 is what is known as a flick operation, which is used to operate GUI operation parts, for example. The flick operation is performed by flicking (snapping) the fingertip on the surface of the top panel 120 for a relatively short distance.

When the user turns over pages, a swipe operation is performed, for example. The swipe operation is performed by brushing the fingertip along the surface of the top panel 120 for a relatively long distance. The swipe operation is performed when the user turns over pages or photos, for example. In addition, when the user slides the slider of a GUI operation part, a drag operation is performed to drag the slider.

Input operations performed by moving the fingertip along the surface of the top panel 120, such as the flick operation, swipe operation, and drag operation described above as examples, are selectively used depending on the type of the application. Therefore, a type of an application executed by the electronic apparatus 100A is relevant in determining whether the position of the user's fingertip performing an input operation is located in a predetermined area where a vibration is to be generated.

The drive control unit 240 uses area data to determine whether the position (contact position) indicated by the position data inputted from the driver IC 151 is located in a predetermined area where a vibration is to be generated.

Second data, in which data representing types of applications, area data representing GUI operation parts and the like on which input operations are performed, and pattern data representing vibration patterns are associated with one another, is stored in the memory 250.

Further, the drive control unit 240 performs the following processing in order to interpolate a positional change of the fingertip for a required period of time after position data is inputted to the drive control IC 300 from the driver IC 151 and before a driving signal is calculated based on the position data.

The drive control IC 300 performs calculations for each predetermined control cycle. The same applies to the drive control unit 240. Therefore, when $\Delta t$ represents a required period of time after the position data is inputted to the drive control IC 300 from the driver IC 151 and before the drive control unit 240 calculates a driving signal based on the position data, the required period of time $\Delta t$ is equal to the control cycle.

The moving speed of the fingertip can be calculated as a velocity. In this case, a position indicated by the position data inputted to the drive control IC 300 from the driver IC 151 is set to a starting point $(x1, y1)$ and a position of the fingertip after a lapse of the required period of time $\Delta t$ is set to an ending point $(x2, y2)$.

The drive control unit 240 estimates coordinates $(x3, y3)$ after a lapse of the required period of time $\Delta t$ by calculating a vector having a starting point $(x2, y2)$ represented by the position data inputted to the drive control IC 300 from the driver IC 151 and having an ending point $(x3, y3)$ corresponding to a position of the fingertip after a lapse of the required period of time $\Delta t$.

As described above, the electronic apparatus 100A of the present embodiment interpolates the positional change of the fingertip over the required period of time $\Delta t$ by estimating coordinates after a lapse of the required period of time $\Delta t$.

The drive control unit 240 performs above-described calculations to estimate coordinates after a lapse of the required period of time $\Delta t$. The drive control unit 240 determines whether the estimated coordinates are located in a predetermined area where a vibration is to be generated, and generates vibrations when the estimated coordinates are located in a predetermined area. Therefore, the second predetermined condition is that the estimated coordinates are located in the predetermined area where a vibration is to be generated.

As per the above, the two predetermined conditions required for the drive control unit 240 to output the amplitude data to the amplitude modulator 320 are that the moving speed of the fingertip is equal to or greater than the predetermined threshold speed and that the estimated coordinates are located in the predetermined area where a vibration is to be generated.

When the moving speed of the fingertip is equal to or greater than the predetermined threshold speed and also when the estimated coordinates are located in the predetermined area where a vibration is to be generated, the drive control unit 240 reads amplitude data representing an amplitude value corresponding to the moving speed and outputs the amplitude data to the amplitude modulator 320.

The memory 250 stores the first data and the second data. The first data represents the relationship between the amplitude data representing an amplitude value and the moving speed. The second data associates data representing types of applications, area data representing GUI operation parts and the like on which input operations are performed, and pattern data representing vibration patterns with one another. Namely, the second data of the present embodiment includes the vibration control information 510.

Further, the memory 250 stores data and programs necessary for the application processor 220 to execute applications and stores data and programs necessary for the communication processor 230 to execute communication processing.

The sine wave generator 310 generates sine waves necessary to generate a driving signal for vibrating the top panel 120 at a natural frequency. For example, in order to vibrate the top panel 120 at a natural frequency f of 33.5 kHz, a frequency of the sine waves becomes 33.5 kHz. The sine wave generator 310 inputs sine wave signals in the ultrasonic frequency band into the amplitude modulator 320.

The amplitude modulator 320 generates a driving signal by modulating the amplitude of a sine wave signal inputted from the sine wave generator 310 based on amplitude data inputted from the drive control unit 240. The amplitude modulator 320 generates a driving signal by modulating only the amplitude of the sine wave signal in the ultrasonic frequency band inputted from the sine wave generator 310 without modulating a frequency or a phase of the sine wave signal.

Therefore, the driving signal outputted from the amplitude modulator 320 is a sine wave signal in the ultrasonic frequency band obtained by modulating only the amplitude of the sine wave signal in the ultrasonic frequency band inputted from the sine wave generator 310. When the amplitude data is zero, the amplitude of the driving signal becomes zero. This is the same as the case in which the amplitude modulator 320 does not output the driving signal.

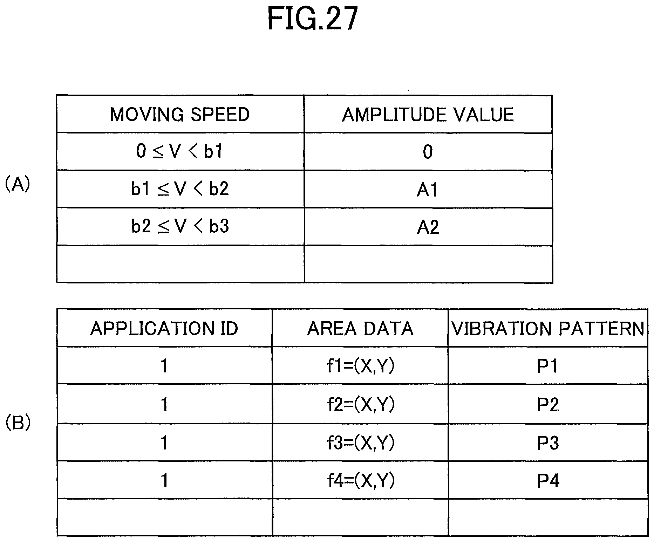

Next, the first data and the second data stored in the memory 250 will be described with reference to Fig. 27.

Fig. 27 is a drawing illustrating the first data and the second data stored in a memory.

As illustrated in Fig. 27(A), the first data associates the amplitude data representing an amplitude value with the moving speed. According to the first data illustrated in Fig. 27(A), when the moving speed V is 0 or more and less than b1 ($0 \leq V < b1$), the amplitude value is set to 0. When the moving speed V is b1 or more and less than b2 ($b1 \leq V < b2$), the amplitude value is set to A1. When the moving speed V is b2 or more and less than b3 ($b2 \leq V < b3$), the amplitude value is set to A2.

As illustrated in Fig. 27(B), the second data associates data representing types of applications, area data representing coordinate values of areas that display GUI operation parts and the like on which input operations are performed, and pattern data representing vibration patterns with one another.

Fig. 27(B) illustrates application identifications (IDs) as data representing application types. Fig. 27(B) also illustrates formulas expressing coordinate values (f1 to f4) of areas that display GUI operation parts and the like on which an input operation is performed. In addition, the pattern data representing vibration patterns P1 to P4 are illustrated. The vibration patterns of the present embodiment may correspond to the friction values of the vibration control information 510, for example.

The applications included in the second data include any applications available on smartphones or tablet computers, and also include an email editing mode.

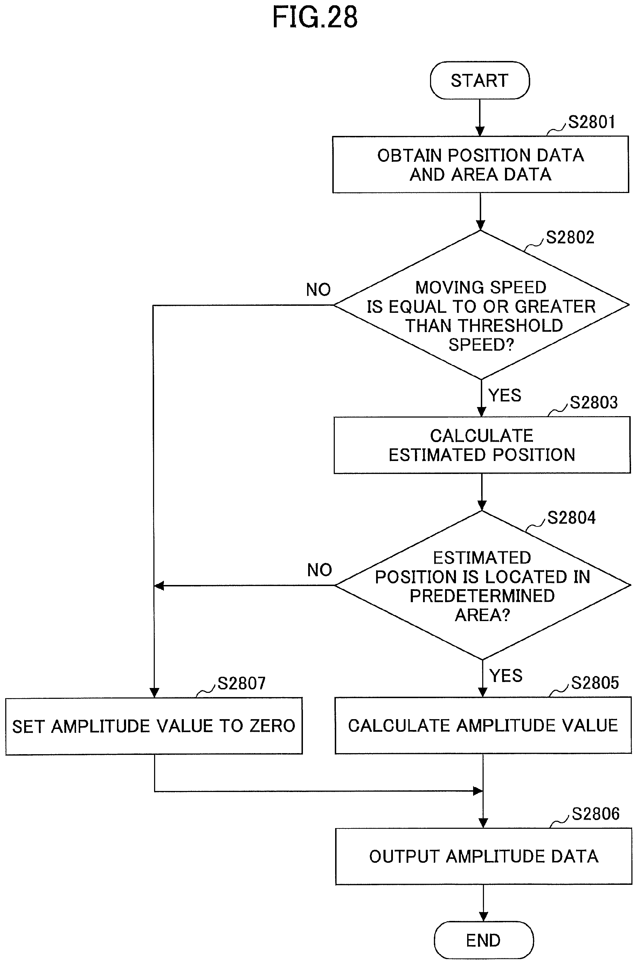

Next, processing executed by the drive control unit 240 of the drive control IC 300 of the electronic apparatus 100A of the present embodiment will be described with reference to Fig. 28.

Fig. 28 is a flowchart illustrating processing executed by the drive control unit 240 of the drive control IC 300 of the electronic apparatus 100A of the present embodiment.

An operating system (OS) of the electronic apparatus 100A executes control for driving the electronic apparatus 100A for each predetermined control cycle. Therefore, the drive control IC 300 performs calculations for each predetermined control cycle. The same applies to the drive control unit 240. The drive control unit 240 performs the flow illustrated in Fig. 28 repeatedly for each predetermined control cycle.

When $\Delta t$ represents a required period of time after position data is inputted to the drive control IC 300 from the driver IC 151 and before the drive control unit 240 calculates a driving signal based on the position data, the required period of time $\Delta t$ is approximately equal to the control cycle.

A period of time of one control cycle can be regarded as corresponding to the required period of time $\Delta t$ after position data is inputted to the drive control IC 300 from the driver IC 151 and before a driving signal is calculated based on the position data.

The drive control unit 240 starts the processing when the electronic apparatus 100A is turned on.

The drive control unit 240 obtains the current coordinates indicated by the position data, and also obtains the area data that is associated with the vibration pattern and that represents a GUI operation part on which the current input operation is performed in accordance with the current application type (step S2801). The area data of the present embodiment is an image area that displays an object image.

The drive control unit 240 determines whether the moving speed is equal to or greater than the predetermined threshold speed (step S2802). The moving speed may be calculated by using vector processing. Furthermore, the threshold speed may be set to the minimum speed of the moving speed of the fingertip when input operations such as what are known as the flick operation, the swipe operation, or the drag operation are performed by moving the fingertip. Such a minimum speed may be set based on, for example, experiment results, the resolution of the touch panel 150, and the like.

When the drive control unit 240 determines that the moving speed is equal to or greater than the predetermined threshold speed in step S2102, the drive control unit 240 calculates estimated coordinates after a lapse of the time $\Delta t$ based on the current coordinates represented by the position data and the moving speed (step S2803).

The drive control unit 240 determines whether the estimated coordinates after the lapse of the time $\Delta t$ is located in the area St that is represented by the area data obtained in step S2801 (step S2805).

When the drive control unit 240 determines whether the estimated coordinates after the lapse of the time $\Delta t$ is located in the area St that is represented by the area data obtained in step S2801, the drive control unit 240 calculates amplitude data representing the amplitude value corresponding to the moving speed obtained in step S2802 from the first data (step S2805).

The drive control unit 240 outputs the amplitude data (step S2806). As a result, the amplitude modulator 320 generates the driving signal by modulating the amplitude of the sine wave outputted from sine wave generator 310, and the vibration element 140 is driven.

In step S2802, when the moving speed is determined not to be equal to or greater than the predetermined threshold speed (NO in step S2802) or when the estimated coordinates after the lapse of the time $\Delta t$ is determined not to be located in the area St represented by the area data obtained in step S2801, the drive control unit 240 sets the amplitude value to zero (step S2807).

As a result, the drive control unit 240 outputs amplitude data whose amplitude value is zero, and the amplitude modulator 320 generates a driving signal by modulating the amplitude of the sine wave outputted from the sine wave generator 310 to zero. Therefore, the vibration element 140 is not driven.

According to the present embodiment, the processing described above makes it possible to provide an excellent tactile sensation when the image area (area data) overlaps with the contact image including the touch coordinates (position data), which are the coordinates of the contact position.

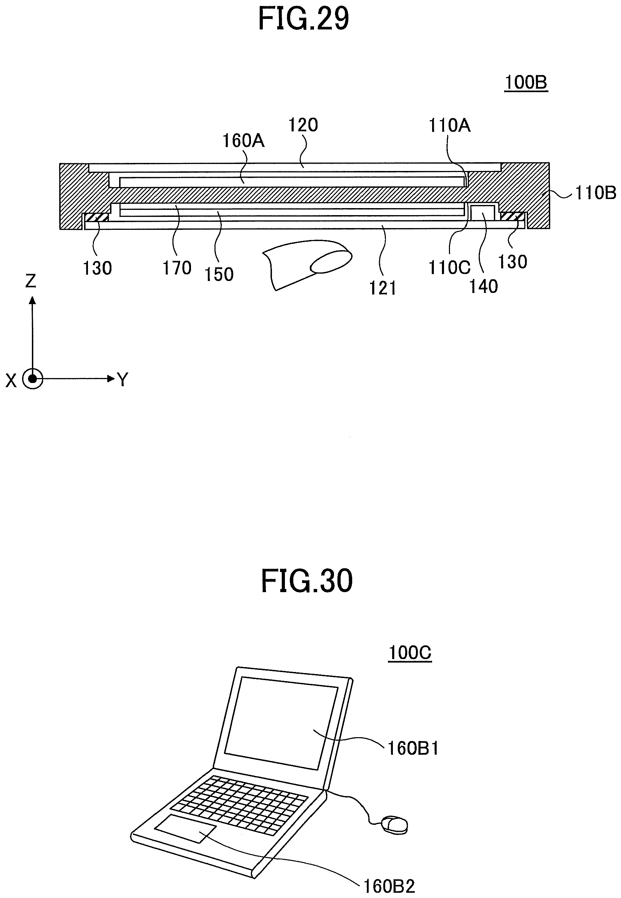

Variations of the electronic apparatus 100A will be described below with reference to Figs. 29 through 32.

Fig. 29 is a cross-sectional view of an electronic apparatus of a first variation. The cross section in Fig. 29 corresponds to the cross section in Fig. 24 taken along line A-A. Similarly to Fig. 24, a XYZ coordinate system, which is a rectangular coordinate system, is defined in Fig. 29.

An electronic apparatus 100B includes a housing 110B, a top panel 120, a panel 121, a double-sided adhesive tape 130, a vibration element 140, a touch panel 150, a display panel 160A, and substrate 170.

The electronic apparatus 100B has a configuration in which the touch panel 150 is provided on the back side (negative z-axis direction side) of the electronic apparatus 100A of Fig. 24. When compared to the electronic apparatus 100A of Fig. 24, the double-sided adhesive tape 130, the vibration element 140, the touch panel 150, and the substrate 170 are disposed on the back side.

A recessed portion 110A is formed on the positive z-axis direction side of the housing 110B and a recessed portion 110C is formed on the negative z-axis direction side of the housing 110B. The display panel 160A is disposed inside the recessed portion 110A and is covered by the top panel 120. In addition, the substrate 170 and the touch panel 150 are provided to overlap each other inside the recessed portion 110C. The panel 121 is secured to the housing 110B with the double-sided adhesive tape 130. The vibration element 140 is provided on the positive z-axis direction side of the panel 121.

In the electronic apparatus 100B illustrated in Fig. 29, the natural vibration in the ultrasonic frequency band can be generated or stopped on the panel 120A by switching an on/off state of the vibration element 140 in accordance with the input operation performed on the panel 120A. Accordingly, similarly to the electronic apparatus 100A of Fig. 24, it is possible to provide the electronic apparatus 100B that allows the user to feel tactile sensations corresponding to images displayed on the display panel 160.

Further, in Fig. 29, the touch panel 150 is provided on the back side of the electronic apparatus 100B. However, touch panels 150 may be provided on the front side and the back side, respectively by combining the configurations illustrated in Fig. 24 and Fig. 29.

Fig. 30 is a drawing illustrating an electronic apparatus of a second variation. An electronic apparatus 100C is a notebook-sized personal computer (PC).

The PC 100C includes a display panel 160B1 and a touch pad 160B2.

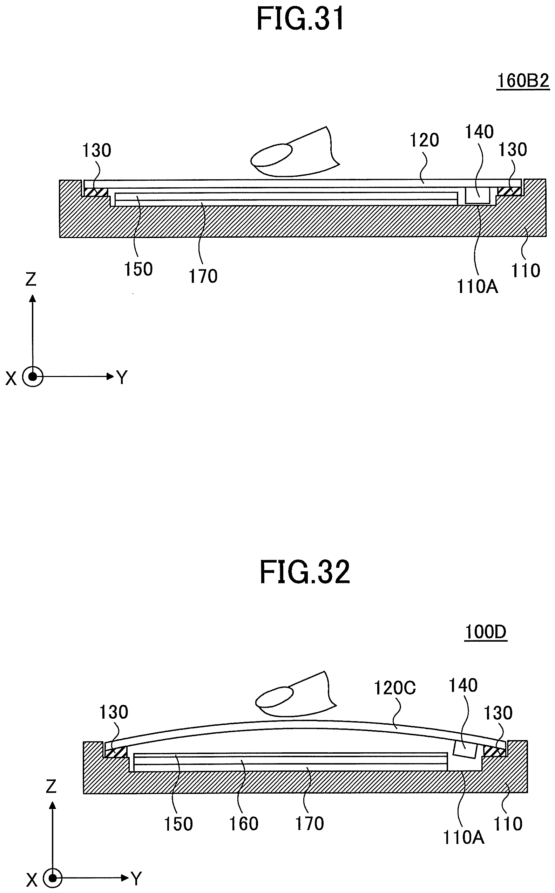

Fig. 31 is a cross-sectional view of the touch pad of the electronic apparatus of the second variation. The cross section in Fig. 31 corresponds to the cross section in Fig. 24 taken along line A-A. Similarly to Fig. 24, a XYZ coordinate system, which is a rectangular coordinate system, is defined in Fig. 31.

The touch pad 160B2 is configured not to include the display panel 160 of Fig. 24.

In the electronic apparatus 100C as the PC illustrated in Fig. 30, the natural vibration in the ultrasonic frequency band can be generated or stopped on the top panel 120 by switching an on/off state of the vibration element 140. Accordingly, as in the case of the electronic apparatus 100A illustrated Fig. 24, it is possible to provide tactile sensations to the user's fingertip based on the amount of movement of an input operation performed on the touch pad 160B2.

Further, when the vibration element 140 is provided on the back side of the display panel 160B1, it is possible to provide tactile sensations to the user's fingertip based on the amount of movement of an input operation performed on the display panel 160B1, as in the case of the electronic apparatus 100A illustrated Fig. 24. In this case, the electronic apparatus 100A illustrated in Fig. 24 may be provided instead of the display panel 160B1.

Fig. 32 is a cross-sectional view of an electronic apparatus of a third variation. An electronic apparatus 100D includes a housing 110, a top panel 120C, a double-sided adhesive tape 130, a vibration element 140, a touch panel 150, a display panel 160, and a substrate 170.

The electronic apparatus 100D illustrated in Fig. 32 has the same configuration as that of the electronic apparatus 100A illustrated in Fig. 24, expect that the top panel 120C is made of curved glass.

When seen in a plan view, the center of the top panel 120C is curved to project toward the positive z-axis direction side. Although Fig. 32 illustrates a cross-sectional shape in the Y-Z plane, a cross-section in the X-Z plane has also the same shape.

As described above, the use of the top panel 120C made of curved glass makes it possible to provide excellent tactile sensations. Specifically, it is effective when an actual object displayed as an image has a curved shape.

Further, the present invention is not limited to these embodiments, but various variations and modifications may be made without departing from the scope of the present invention.

[Description of Reference Symbols]

31, 32 Object image
100 Electronic apparatus
101 Input operation part
140 Vibration element
150 Touch panel
160 Display panel
200 Arithmetic processing unit
300 Drive control IC
400 Vibration control processing unit
410 Contact detection unit
420 Touch information obtaining unit
430 Moving direction determining unit
440 Overlapping area obtaining unit
450 Overlapping change calculating unit
460 Overlapping change determining unit
470 Vibration control unit
500 Storage unit
510 Vibration control information

**Claims**

1. An electronic apparatus comprising:

   a calculation unit configured to calculate a change in size of an overlapping area between a contact area and an image area when the contact area detected on an input operation part moves across a boundary of the image area that displays an object image on the input operation part; and

a vibration control unit configured to change a type or an intensity of a vibration applied to the input operation part in accordance with the change.

2. The electronic apparatus according to claim 1, wherein the vibration control unit is configured to decrease an amplitude value of the vibration as the overlapping area increases and to increase the amplitude value of the vibration as the overlapping area decreases.

3. The electronic apparatus according to claim 2, wherein the vibration control unit is configured to decrease, for a period of time after the contact area located in a non-image area that does not display the object image has started moving across the boundary of the image area until the size of the overlapping area has become half the size of the contact area, the amplitude value of the vibration from the amplitude value that is applied when the contact area is located in the non-image area on the input operation part to a minimum value of the amplitude value.

4. The electronic apparatus according to claim 3, wherein the vibration control unit is configured to increase the amplitude value of the vibration from the minimum value to a maximum value of the amplitude value when the size of the overlapping area becomes half the size of the contact area.

5. The electronic apparatus according to claim 4, wherein the vibration control unit is configured to decrease, for a period of time from the size of the overlapping area being half the size of the contact area until becoming the same size as the contact area, the amplitude value of the vibration from the maximum value of the amplitude to the amplitude value that is applied while the contact area is located in the image area.

6. The electronic apparatus according to any one of claims 3 to 5, wherein the vibration control unit is configured to decrease, for a period of time after the contact area located in the image area has started moving across the boundary of the image area until having moved to the non-image area, the amplitude value of the vibration from the amplitude value that is applied when the contact area is located in the image area to the minimum value.

7. The electronic apparatus according to claim 6, wherein the vibration control unit is configured to, after decreasing the amplitude value of the vibration to the minimum value, set the amplitude value that is applied when the contact area is located in the non-image area.

8. The electronic apparatus according to any one of claims 3 to 7, wherein the amplitude value that is applied when the contact area is located in the non-image area is larger than the amplitude value that is applied when the contact area is located in the image area.

9. The electronic apparatus according to any one of claims 1 to 8, wherein the size of the overlapping area is a value that represents a width of the overlapping area in a moving direction of the contact area.

10. The electronic apparatus according to any one of claims 2 to 9, wherein the vibration control unit is configured to change the amplitude value of the vibration with reference to vibration control information that stores a value corresponding to the amplitude value of the vibration for each pixel of an image displayed on the input operation part.

11. A vibration control program for causing a computer to execute processing comprising:

calculating a change in size of an overlapping area between a contact area and an image area when the contact area detected on an input operation part moves across a boundary of the image area that displays an object image; and

changing a type or an intensity of a vibration applied to the input operation part in accordance with the change.

# FIG.1

# FIG.2

# FIG.3

STATE 1   STATE 2   STATE 3   STATE 4   STATE 5

EP 3 293 616 A1

# FIG.4

# FIG.5

EP 3 293 616 A1

STATE 1     STATE 2     STATE 3     STATE 4     STATE 5

# FIG.6

# FIG.7

100

101

# FIG.8

ELECTRONIC APPARATUS

```
TOUCH
PANEL          150

DRIVER IC      151

ARITHMETIC
PROCESSING
UNIT           200

DISPLAY
PANEL          160

DRIVER IC      161

DRIVE
CONTROL IC     300

AMPLIFIER      141

VIBRATION
ELEMENT        140

MEMORY         210
```

100

# FIG.9

**VIBRATION CONTROL PROCESSING UNIT** ~400

- CONTACT DETECTION UNIT ~410
- TOUCH INFORMATION OBTAINING UNIT ~420
- MOVING DIRECTION DETERMINING UNIT ~430
- OVERLAPPING AREA OBTAINING UNIT ~440
- OVERLAPPING CHANGE CALCULATING UNIT ~450
- OVERLAPPING CHANGE DETERMINING UNIT ~460
- VIBRATION CONTROL UNIT ~470

**STORAGE UNIT** ~500

- VIBRATION CONTROL INFORMATION ~510
- TOUCH INFORMATION ~520
- OVERLAPPING AREA INFORMATION ~530

~100

# FIG.10

PATTERN 1　　　　PATTERN 2　　　　PATTERN 3

# FIG.11

MAJOR AXIS

TOUCH COORDINATES

MINOR AXIS

TOUCH SIZE

INCLINATION: Rn

PATTERN 1　　　　PATTERN 2

# FIG.12

122
NON-IMAGE AREA

121
IMAGE AREA

123
CONTACT AREA

TOUCH
COORDINATES

DIAMETER

VALUE INDICATING SIZE OF
OVERLAPPING AREA

124
OVERLAPPING AREA

Y

X

EP 3 293 616 A1

# FIG.13

122 NON-IMAGE AREA

121 IMAGE AREA

123 CONTACT AREA

125

9 8 7 6 5 4 3 2 1

DIAMETER

VALUE INDICATING SIZE OF OVERLAPPING AREA

124 OVERLAPPING AREA

Y

X

# FIG.14

141

142
IMAGE AREA

143
NON-IMAGE AREA

510

512

511

# FIG.15

```
                    ( START )
                       │
                       ▼
            ┌─────────────────────┐ S1501
            <  RECEIVE INPUT?  >──── NO ──┐
            └─────────────────────┘       │
                       │ YES              │
                       ▼  S1502           │
         ┌──────────────────────────┐     │
         │ OBTAIN AND SAVE          │     │
         │ TOUCH INFORMATION        │     │
         └──────────────────────────┘     │
                       │ S1503            │
         ┌──────────────────────────┐     │
         │ OBTAIN FRICTION VALUE    │     │
         │ THAT CORRESPONDS TO      │     │
         │ TOUCH COORDINATES        │     │
         └──────────────────────────┘     │
                       │ S1504            │
         ┌──────────────────────────┐     │
         │ DETERMINE MOVING DIRECTION│    │
         │ OF FINGER BY COMPARING WITH│   │
         │ PREVIOUSLY OBTAINED TOUCH │    │
         │ COORDINATES              │     │
         └──────────────────────────┘     │
                       │ S1505            │
         ┌──────────────────────────┐     │
         │ OBTAIN AND SAVE VALUE INDI-│   │
         │ CATING SIZE OF OVERLAPPING│    │
         │ AREA IN MOVING DIRECTION │     │
         └──────────────────────────┘     │
                       │ S1506            │
         ┌──────────────────────────┐     │
         │ CALCULATE VALUE INDICAT- │     │
         │ ING CHANGE IN SIZE OF    │     │
         │ OVERLAPPING AREA         │     │
         └──────────────────────────┘     │
                       │ S1507            │
      Wd<0    ┌─────────────────┐  Wd>0   │
      ┌───────< CHANGE VALUE OF >──────────┐
      │       < THE OVERLAPPING >          │
      │       < AREA Wd?        >          │
      │       └─────────────────┘          │
      │              │ Wd=0                │
      │              ▼  S1508              ▼ S1513
      │       ┌──────────────┐      ┌──────────────┐
      │       < CHANGE VALUE >      < TOUCH        >─ NO ─┐
      │       < OF OVER-     >      < COORDINATES  >      │
      │       < LAPPING AREA > NO   < ENTER IMAGE  >      │
      │       < IS ZERO OR   >──┐   < AREA?        >      │
      │       < MAXIMUM VALUE?> │   └──────────────┘      │
      │       └──────────────┘  │    │ YES               │
      │ S1511  │ YES            │    ▼ S1514             ▼ S1516
 ┌─────────┐   │ S1509         │ ┌──────────┐      ┌──────────┐
 │CORRECT  │   ▼               │ │CORRECT   │      │CORRECT   │
 │FRICTION │ ┌──────────┐      │ │FRICTION  │      │FRICTION  │
 │VALUE BY │ │INSTRUCT  │      │ │VALUE BY  │      │VALUE BY  │
 │EXECUTING│ │TO CONTROL│      │ │EXECUTING │      │EXECUTING │
 │CORRECT- │ │VIBRATION │      │ │CORRECTION│      │CORRECTION│
 │ION      │ │BASED ON  │      │ │PROCESSING│      │PROCESSING│
 │PROCESS- │ │FRICTION  │      │ │2         │      │3         │
 │ING 1    │ │VALUE OF  │      │ └──────────┘      └──────────┘
 └─────────┘ │CURRENT   │      │    │ S1515            │ S1517
      │ S1512 │TOUCH     │      ▼    ▼                 ▼
 ┌─────────┐ │COORD-    │ ┌──────────┐ ┌──────────┐ ┌──────────┐
 │INSTRUCT │ │INATES    │ │INSTRUCT  │ │INSTRUCT  │ │INSTRUCT  │
 │TO       │ └──────────┘ │TO CONTROL│ │TO CONTROL│ │TO CONTROL│
 │CONTROL  │              │VIBRATION │ │VIBRATION │ │VIBRATION │
 │VIBRATION│              │BASED ON  │ │BASED ON  │ │BASED ON  │
 │BASED ON │              │FRICTION  │ │CORRECTED │ │CORRECTED │
 │CORRECTED│              │VALUE OF  │ │FRICTION  │ │FRICTION  │
 │FRICTION │              │PREVIOUS  │ │VALUE     │ │VALUE     │
 │VALUE    │              │TOUCH     │ └──────────┘ └──────────┘
 └─────────┘              │COORD-    │
      │                   │INATES    │
      │                   └──────────┘
      │            S1510       │
      └────────────┬───────────┴──────────────────────┘
                   ▼ S1518
           ┌──────────────┐
    NO ────< OPERATION    >── YES
    │      < ENDS?        >    │
    │      └──────────────┘    ▼ S1519
    │                   ┌──────────────┐
    │                   │INITIALIZE    │
    │                   │TOUCH INFORMA- │
    │                   │TION AND       │
    │                   │OVERLAPPING    │
    │                   │AREA INFORMA-  │
    │                   │TION           │
    │                   └──────────────┘
    │                          │
    │                          ▼
    │                       ( END )
    └──────────────
```

# FIG.16

```
START
```

S1601

f1(x) =
(FRICTION VALUE OF IMAGE AREA –
MINIMUM FRICTION VALUE)
/ (MAXIMUM OVERLAP VALUE –
MINIMUM OVERLAP VALUE) · x +
MINIMUM FRICTION VALUE

S1602

UPDATE FRICTION VALUE

```
END
```

# FIG.17

```
START
```

S1701

f2(x) =
(FRICTION VALUE OF IMAGE AREA –
MINIMUM FRICTION VALUE)
/ (MAXIMUM OVERLAP VALUE / 2) · x +
MINIMUM FRICTION VALUE

S1702

UPDATE FRICTION VALUE

```
END
```

# FIG.18

START

S1801

f3(x) =
(MAXIMUM FRICTION VALUE −
FRICTION VALUE OF NON-IMAGE AREA)
/ (MAXIMUM OVERLAP VALUE / 2) · x +
FRICTION VALUE OF NON-IMAGE AREA

S1802

UPDATE FRICTION VALUE

END

# FIG.19

EP 3 293 616 A1

FIG.20

# FIG.21

21  
22 IMAGE AREA  
24  
241  
23 NON-IMAGE AREA  
25  
26  
510  
512  
511

EP 3 293 616 A1

FIG.22

# FIG.23

100A

120    150,160    130    140    110

# FIG.24

100A

130    120    140    130

150    160    170    110A    110

# FIG.25

(A)

120

EP 3 293 616 A1

(B)

120

# FIG.26

(A)

120

HIGH FRICTION — VIBRATION OFF

LOW FRICTION — VIBRATION ON

(B)

120

LOW FRICTION — VIBRATION ON

HIGH FRICTION — VIBRATION OFF

EP 3 293 616 A1

# FIG.27

(A)

| MOVING SPEED | AMPLITUDE VALUE |
|---|---|
| $0 \leq V < b1$ | 0 |
| $b1 \leq V < b2$ | A1 |
| $b2 \leq V < b3$ | A2 |
| | |

(B)

| APPLICATION ID | AREA DATA | VIBRATION PATTERN |
|---|---|---|
| 1 | f1=(X,Y) | P1 |
| 1 | f2=(X,Y) | P2 |
| 1 | f3=(X,Y) | P3 |
| 1 | f4=(X,Y) | P4 |
| | | |

# FIG.28

```
        ( START )
           │
           ▼                      S2801
  ┌─────────────────────┐
  │  OBTAIN POSITION DATA │
  │    AND AREA DATA      │
  └─────────────────────┘
           │
           ▼                      S2802
          ╱╲
        ╱     ╲
NO    ╱  MOVING SPEED ╲
◄────╱ IS EQUAL TO OR GREATER╲
     ╲  THAN THRESHOLD       ╱
      ╲    SPEED?          ╱
        ╲     ╱
          ╲ ╱
           │ YES                 S2803
           ▼
  ┌─────────────────────┐
  │      CALCULATE       │
  │  ESTIMATED POSITION  │
  └─────────────────────┘
           │
           ▼                      S2804
          ╱╲
        ╱     ╲
NO    ╱  ESTIMATED  ╲
◄────╱ POSITION IS LOCATED IN ╲
     ╲  PREDETERMINED        ╱
      ╲    AREA?           ╱
        ╲     ╱
          ╲ ╱
           │ YES
```

S2807

┌─────────────────────────────┐
│  SET AMPLITUDE VALUE TO ZERO │
└─────────────────────────────┘

S2805

┌─────────────────────────────┐
│   CALCULATE AMPLITUDE VALUE  │
└─────────────────────────────┘

S2806

┌─────────────────────────────┐
│     OUTPUT AMPLITUDE DATA    │
└─────────────────────────────┘

( END )

# FIG.29

100B

160A    120         110A

110B

130    170  150    121    110C  130
                              140

Z
↑
X ⊙ →Y

# FIG.30

100C

160B1

160B2

# FIG.31

# FIG.32

## INTERNATIONAL SEARCH REPORT

| | International application No. |
|---|---|
| | PCT/JP2015/063209 |

**A. CLASSIFICATION OF SUBJECT MATTER**
*G06F3/041*(2006.01)i, *G06F3/01*(2006.01)i, *G06F3/0488*(2013.01)i

According to International Patent Classification (IPC) or to both national classification and IPC

**B. FIELDS SEARCHED**

Minimum documentation searched (classification system followed by classification symbols)
G06F3/041, G06F3/01, G06F3/0488

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-520519 A  (Immersion Corp.), 06 September 2012 (06.09.2012), paragraphs [0019], [0035]; fig. 2A, 2B & JP 2012-520523 A     & US 2010/0231367 A1 & US 2010/0231539 A1    & WO 2010/105001 A1 & CN 102349039 A | 1–11 |
| A | JP 2014-112357 A  (Immersion Corp.), 19 June 2014 (19.06.2014), paragraphs [0042] to [0045], [0050]; fig. 4, 5 & US 2014/0118127 A1     & EP 2728445 A2 & CN 103793051 A          & KR 10-2014-0056042 A | 1–11 |
| A | JP 2013-156686 A  (KDDI Corp.), 15 August 2013 (15.08.2013), paragraphs [0082] to [0088]; fig. 2, 7 (Family: none) | 1–11 |

☒ Further documents are listed in the continuation of Box C.          ☐ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 06 July 2015 (06.07.15) | 14 July 2015 (14.07.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
| --- |
| PCT/JP2015/063209 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2015-15027 A  (Immersion Corp.),<br>22 January 2015 (22.01.2015),<br>paragraphs [0027] to [0030], [0060] to [0065]<br>& US 2015/0009168 A1     & EP 2821912 A1<br>& CN 104281257 A          & KR 10-2015-0004276 A | 1-11 |
| A | WO 2014/006799 A1  (NEC Corp.),<br>09 January 2014 (09.01.2014),<br>paragraphs [0018], [0019]<br>(Family: none) | 1-11 |
| A | JP 2006-163206 A  (NTT Docomo Inc.),<br>22 June 2006 (22.06.2006),<br>paragraphs [0056] to [0071]; fig. 18<br>(Family: none) | 1-11 |
| A | WO 2015/045059 A1  (Fujitsu Ltd.),<br>02 April 2015 (02.04.2015),<br>paragraphs [0138] to [0145]; fig. 13, 14<br>& US 2014/0347322 A1 | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013156686 A